(19) Europäisches Patentamt / European Patent Office / Office européen des brevets

(11) **EP 4 042 115 B1**

(12) **EUROPEAN PATENT SPECIFICATION**

(45) Date of publication and mention
of the grant of the patent:
**30.10.2024   Bulletin 2024/44**

(21) Application number: **20807092.0**

(22) Date of filing: **09.10.2020**

(51) International Patent Classification (IPC):
$G01F\ 1/00$ *(2022.01)*     $G01F\ 1/32$ *(2022.01)*
$G01F\ 1/34$ *(2006.01)*     $G01F\ 1/74$ *(2006.01)*
$G01F\ 1/84$ *(2006.01)*     $G01F\ 25/00$ *(2022.01)*

(52) Cooperative Patent Classification (CPC):
**G01F 1/00;** G01F 1/32; G01F 1/34; G01F 1/74;
G01F 1/84; G01F 25/00

(86) International application number:
**PCT/GB2020/052535**

(87) International publication number:
**WO 2021/069932 (15.04.2021 Gazette 2021/15)**

(54) **IMPROVEMENTS RELATING TO FLUID FLOW MEASUREMENT**

VERBESSERUNGEN IM ZUSAMMENHANG MIT FLÜSSIGKEITSSTROMMESSUNGEN

AMÉLIORATIONS RELATIVES À LA MESURE DE DÉBIT DE FLUIDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **11.10.2019   US 201962914073 P**

(43) Date of publication of application:
**17.08.2022   Bulletin 2022/33**

(73) Proprietors:
 • **Steven, Richard**
   **Johnstown, Colorado 8534 (US)**
 • **Stockton, Philip**
   **Aberdeen AB10 1UP (GB)**
 • **Wilson, Allan**
   **Aberdeen AB10 1UP (GB)**

(72) Inventors:
 • **Steven, Richard**
   **Johnstown, Colorado 8534 (US)**

 • **Stockton, Philip**
   **Aberdeen AB10 1UP (GB)**
 • **Wilson, Allan**
   **Aberdeen AB10 1UP (GB)**

(74) Representative: **Scintilla Intellectual Property Ltd
Suite 2.1
145 St. Vincent Street
Glasgow G2 5JF (GB)**

(56) References cited:
WO-A1-2018/195368       US-A1- 2010 191 481
US-A1- 2018 073 904

 • **"Uncertainty of measurement -- Part 3: Guide to
the expression of uncertainty in measurement
(GUM:1995)", ISO/IEC GUIDE 98-3:2008, IEC, 3,
RUE DE VAREMBÉ, PO BOX 131, CH-1211
GENEVA 20, SWITZERLAND, 30 September 2008
(2008-09-30), pages 1 - 120, XP082008076**

**Description**

TECHNICAL FIELD

The present disclosure relates to improvements relating to fluid flow measurement, and in particular to methods of metering fluid flow, a fluid flow metering system, and computer program products for metering fluid flow.

BACKGROUND

Flow metering is important to industry. Precise flow metering is required for custody transfer, fiscal, and process control applications. Flow meter manufacturers of all flow meter types strive to lower flowrate prediction uncertainty. However, in recent years reductions in flowrate prediction uncertainty have dwindled, and flow meter performance has plateaued. WO 2018/195368 A1 discloses a method for detecting and correcting for discrepancy events in a fluid pipeline, involving determining a corrected branch flow rate for said pipeline after accounting for and outputting a corrected branch flow rate for said pipeline to user.

It would be desirable to further improve flow meter performance, for example by lowering the uncertainty of flow meter readings.

SUMMARY

The disclosure involves applying MLU or other similar techniques at a micro level, that is, to an individual flow meter or other type of instrumentation/measurement apparatus, rather than at a macro or system level.

In a general sense, the disclosure involves the use of multiple instruments in conjunction with physical laws to reduce a metering system's overall uncertainty.

It is possible to provide a physical assembly of two (or more) flow meters, or one meter with additional instrumentation, and then to compare the resulting data set as a whole with physical law/s such that discrepancies arising from instrument reading uncertainty are mitigated.

According to another aspect, the disclosure provides a method of metering fluid flow comprising: using a first flow meter to produce a first flow rate reading of the flow to be metered with an associated first uncertainty; using a second flow meter to produce a second flow rate reading of said flow to be metered with an associated second uncertainty; and calculating a flow rate prediction based on the combination of the first flow rate reading, the second flow rate reading, the first uncertainty, the second uncertainty, and applying criteria based on physical laws; wherein the flow rate prediction has an associated uncertainty which is less than each of the first uncertainty and the second uncertainty.

The physical laws may for example be conservation of energy, conservation of mass, or other laws related to these physical principles. One or more criteria can be applied based on physical laws by inferring relationships between meter readings and/or other measured parameters that express the principles of the physical laws, and using those inferred relationships when calculating a prediction based on the input meter readings and/or other measured parameters.

A flow meter comprises any arrangment of components that can measure a fluid flow rate. The first flow meter and the second flow meter can be provided by any arrangement of components that can provide two alternative readings of a fluid flow rate, where the two alternative readings are expected in theory for an ideal system to yield the same result or to yield results which are related to each other in a known way. The first and second flow meters may be independent and different discrete physical devices, or they may be dependent in the sense that they share at least a portion of a fluid flow space or pressure field, and/or share some physical components.

It is also possible to use more than two flow meters. In that case, flow rate readings produced by each flow meter have respective associated uncertainties, and where the calculated flow rate prediction is based on the combination of all the flow rate readings, their respective uncertainties and by applying criteria based on physical laws; and wherein flow rate prediction has an associated uncertainty which is less than each of the uncertainties. In other words, the flow rate prediction has an associated uncertainty which is guaranteed to be less than the lowest uncertainty of the constituent individual flow meters.

Optionally, the first and second flow meters are in series.

Optionally, the or each of the first and second flow meters comprise a set of subsidiary flow meters connected in parallel.

Optionally, the first and second flow meters operate on the same physical principles.

Optionally, the first and second flow meters operate on different physical principles.

Optionally, the first and second flow meters are sub-systems in a single hybrid flow meter body.

Optionally, the flow metering sub-systems in the hybrid flow meter operate on the same physical principles.

Optionally, the metering sub-systems are independent ultrasonic transducer sets in one ultrasonic meter body, producing two or more independent flow rate readings.

Optionally, the sub-systems operate on different physical principles.

Optionally, the sub-systems comprise a vortex meter and a cone meter set together in a hybrid meter body, producing two or more independent flow rate readings.

Optionally, the two sub-systems comprise a primary flow meter system with a secondary independent DP meter formed by reading one or more differential pressures across two points in the primary flow meter system.

Optionally, the sub-systems comprise an independent Coriolis meter and an independent DP meter formed from reading a differential pressure between two points across the Coriolis meter body, producing two independent flow rate readings.

Optionally, a flow metering system comprises a primary fluid obstruction element and three pressure taps provided at positions respectively upstream, midstream and downstream in relation to the primary fluid obstruction element; and wherein the first and second flow meters are provided by respective different pairs of measurement devices provided at two of the three pressure taps and a calculation device together arranged to read a pressure difference between each of the respective pairs, to produce the first and second flow rate readings.

Optionally, flow rate readings are produced by measuring each of: a permanent pressure loss (PPL) differential pressure taken between the upstream and downstrem pressure taps; a traditional differential pressure taken between the upstream and midstream pressure taps; and a recovered differential pressure taken between the midstream and the downstream pressure taps.

Optionally, the flow metering system comprises one of: an orifice DP meter; a Venturi DP meter; a cone DP meter; a nozzle DP meter; and a wedge DP meter.

Optionally, the first and second flow meters are calibrated before use.

Optionally, the flow is a wet gas flow.

Optionally, calculating a flow rate prediction comprises applying an Extended Kalman Filter in order to reduce system parameters, estimations and their associated uncertainties, thereby calibrating the flow metering system in-situ.

Optionally, calculating a flow rate prediction comprises applying one of: Robust Maximum Likelihood Uncertainty; Extended Kalman Filter; Unscented Kalman Filter; H-infinity filter; and Bayesian updating.

Optionally, the flow rate prediction is one of: a mass flow rate; a volume flow rate; an energy flow rate; and a mass or mole component flow rate.

According to a further aspect, the disclosure provides a fluid flow metering system comprising: a first flow meter configured to produce a first flow rate reading of a flow to be metered which has an associated first uncertainty; a second flow meter configured to produce a second flow rate reading of said flow to be metered which has an associated second uncertainty; and a calculation device configured to calculating a flow rate prediction based on the combination of the first flow rate reading, the second flow rate reading, the first uncertainty, the second uncertainty, and by applying criteria based on physical laws; wherein the flow rate prediction has an associated uncertainty which is less than each of the first uncertainty and the second uncertainty.

Optionally, the first and second flow meters are in series.

Optionally, the or each of the first and second flow meters comprise a set of subsidiary flow meters connected in parallel.

Optionally, the first and second flow meters operate on the same physical principles.

Optionally, the first and second flow meters operate on different physical principles.

Optionally, the first and second flow meters are sub-systems in a single hybrid flow meter body.

Optionally, the flow metering sub-systems in the hybrid flow meter operate on the same physical principles.

Optionally, the metering sub-systems are independent ultrasonic transducer sets in one ultrasonic meter body, producing two or more independent flow rate readings.

Optionally, the sub-systems operate on different physical principles.

Optionally, the sub-systems comprise a vortex meter and a cone meter set together in a hybrid meter body, producing two or more independent flow rate readings.

Optionally, the two sub-systems comprise a primary flow meter system with a secondary independent DP meter formed by reading one or more differential pressures across two points in the primary flow meter system.

Optionally, the sub-systems comprise an independent Coriolis meter and an independent DP meter formed from reading a differential pressure between two points across the Coriolis meter body, producing two independent flow rate readings.

Optionally, a flow metering system comprises a primary fluid obstruction element and three pressure taps provided at positions respectively upstream, midstream and downstream in relation to the primary fluid obstruction element; and wherein the first and second flow meters are provided by respective different pairs of measurement devices provided at two of the three pressure taps and a calculation device together arranged to read a pressure difference between each of the respective pairs, to produce the first and second flow rate readings.

Optionally, the flow metering system comrpises one of: an orifice DP meter; a Venturi DP meter; a cone DP meter; a nozzle DP meter; and a wedge DP meter.

Optionally, the first and second flow meters are calibrated before use.

Optionally, the flow is a wet gas flow.

Optionally, the calculation device is configured to apply an extended Kalman filter in order to reduce system parameters, estimations and their associated uncertainties, thereby calibrating the flow metering system in-situ.

Optionally, the calculation device is configured to apply one or more of: Robust Maximum Likelihood Uncertainty; Extended Kalman Filter; Unscented Kalman Filter; H-infinity filter; and Bayesian updating.

Optionally, the flow rate prediction is one of: a mass flow rate; a volume flow rate; an energy flow rate; and a mass or mole component flow rate.

According to further aspects, the disclosure provides a computer program product comprising instructions that, when executed on a device being one of a computer, a dedicated flow computer, or circuitry, configure the device to: receive a first flow rate reading of a flow to be metered from a first flow meter, with an associated first uncertainty; receive a second flow rate reading of said flow to be metered from a second flow meter, with an associated second uncertainty; and calculate a flow rate prediction based on the combination of the first flow rate reading, the second flow rate reading, the first uncertainty, the second uncertainty, and applying criteria based on physical laws; wherein the flow rate prediction has an associated uncertainty which is less than each of the first uncertainty and the second uncertainty.

The computer program product may be stored on or transmitted as one or more instructions or code on a computer-readable medium. Computer-readable media includes both computer storage media and communication media including any medium that facilitates transfer of a computer program from one place to another. A storage media may be any available media that can be accessed by a computer. By way of example such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fibre optic cable, twisted pair, digital subscriber line (DSL), or wireless technologies such as infra-red, radio, and microwave, then the coaxial cable, fibre optic cable, twisted pair, DSL, or wireless technologies such as infra-red, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media. The instructions or code associated with a computer-readable medium of the computer program product may be executed by a computer, e.g., by one or more processors, such as one or more digital signal processors (DSPs), general purpose microprocessors, ASICs, FPGAs, or other equivalent integrated or discrete logic circuitry.

BRIEF DESCRIPTION OF THE DRAWINGS

The present disclosure is described below, by way of example only, with reference to the accompanying drawings, in which:

Figure 1 illustrates a Venturi meter with instrumentation sketch and pressure field graph;

Figure 2 illustrates a De Leeuw wet gas Venturi meter design;

Figure 3 illustrates a vortex Meter and cone DP hybrid meter;

Figure 4 illustrates check Metering with two flow meters in series;

Figure 5 illustrates flow meters in series and parallel;

Figure 6 illustrates a vortex Meter and cone DP meter installed in series;

Figure 7 is a schematic sketch of a four path plus one bounce path ultrasonic meter/s design;

Figure 8 illustrates a Coriolis meter with added permanent pressure loss reading;

Figure 9 illustrates a cone DP Meter with instrumentation sketch and pressure field graph;

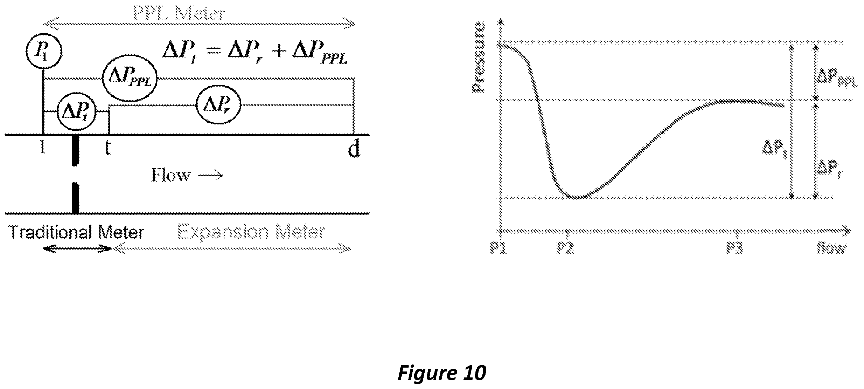

Figure 10 illustrates an orifice meter with instrumentation sketch and pressure field graph;

Figure 11 illustrates a Flow Meter Kalman Filter Algorithm which may be implemented in circuitry, firmware or software;

Figure 12 is a schematic diagram showing an orifice meter with a flow prediction uncertainty of 0.75% was installed in a natural gas test facility with a reference gas meter with a 0.5% uncertainty;

Figure 13 shows Reference, Traditional and Kalman MLU mass flow rate versus time;

Figure 14 shows Standard orifice Meter and Kalman MLU cumulative mass difference with Reference Meter versus time;

Figure 15 shows Traditional and Kalman MLU mass flow rate uncertainties versus time step;

Figure 16 shows Evolution of Kalman MLU Modified Coefficient Cd' versus time step; and

Figure 17 shows a flow metering system according to this disclosure.

## DETAILED DESCRIPTION

Industry runs large complex pipework systems with multiple and varied equipment such as multiple valves, pressure and temperature sensors, flow meters etc. However, due to the inherent uncertainty in each equipment setting and instrumentation output, the resulting massed raw data can be somewhat inconsistent. As such industry applies 'Maximum Likelihood Uncertainty' (MLU) techniques on the macro overall pipe system. Such techniques involve mathematical procedures that combine a pipework's multiple instrumentation readings, equipment settings, associated uncertainties, and governing physical laws, to automatically validate data and reconcile measurements such that the whole makes physical sense.

With these macro process system MLU techniques industry considers the flow meter system like any other instrument output, i.e. as a single node, a single point measurement. There has not been any attempt to take a flow meter design's sub-systems and develop MLU techniques specifically tailored to the internal operation of that specific metering system for the purpose of improving that individual flow meter's performance, for all the advantages that would entail. In this disclosure MLU techniques are applied specifically to flow metering systems to improve the performance of the flow meter, including fine adjustments to the stated flowrate prediction while lowering its uncertainty. This requires multiple instrument readings, but this is achievable with 1) two meters in series making a metering system, or 2) a hybrid meter that incorporates two or more metering principles in one metering system, or 3) use of standalone meters with either 3a) suitable added instrumentation or, 3b) suitable existing diagnostic systems giving suitable secondary valuable information.

### 2. Basic Techniques for Flow Meter Validation

### 2.1 Check Metering

Industry has long used two separate flow meters in series as a rudimentary check that the flowrate predictions can be trusted. There is a primary meter and a secondary check meter. To avoid common source problems the two meters would ideally be different designs (i.e. use different physical principles). However, in practice the same meter type is often used twice. If the two meters' flowrate predictions agree within their combined uncertainties it is assumed that the primary meter is working correctly, and the primary meter's flowrate prediction with its associated uncertainty is then taken as the answer. There is no more use for the check meter's information. The aim is to singularly check the primary meter is trustworthy, hence the second meter being called a 'check' meter, and the method called 'check metering'. There is no attempt to reduce the overall flowrate prediction uncertainty by including the check meter information in the final flowrate and uncertainty output.

### 2.2. A DP Meter Diagnostics / Validation System

Steven's teachings [3] disclosed a Differential Pressure (DP) meter diagnostic system that utilizes a third pressure tap downstream of the traditional DP meter. This allows the measurement of two or three DPs instead of the traditional single 'primary' DP.

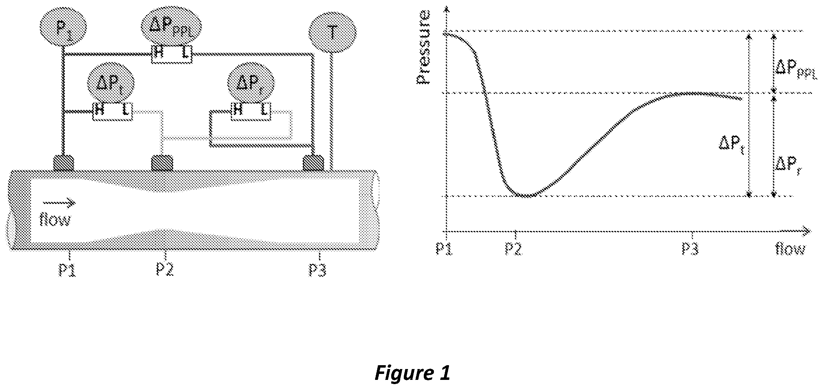

Figure 1 shows a sketch of a generic DP meter with three DP readings and the meter's pressure field. There is a third pressure tap ($P_3$) downstream of the two primary (or 'traditional') pressure ports ($P_1$ & $P_2$). This allows three DPs to be read, i.e. the primary or 'traditional' DP ($\Delta P_t$), recovered DP ($\Delta P_r$) and permanent pressure loss DP ($\Delta P_{PPL}$). Equation 1 relates these DPs. The check that the three read DPs comply with equation 1 within the combined uncertainties is a diagnostic check.

$$
\begin{array}{lll}
\text{DP Summation:} & \Delta P_t = \Delta P_r + \Delta P_{PPL} \, , & \text{--- (1)} \\[4pt]
\text{Traditional flow calculation:} & m_{trad} = f(\Delta P_t), & \text{--- (2)} \\[4pt]
\text{Expansion flow calculation:} & m_{exp} = f(\Delta P_r), & \text{--- (3)} \\[4pt]
\text{PPL flow calculation:} & m_{PPL} = f(\Delta P_{PPL}), & \text{--- (4)}
\end{array}
$$

Each DP can be used to individually meter the flow rate, as shown in equations 2, 3 & 4. Here $m_{trad}$, $m_{exp}$, & $m_{PPL}$ are the mass flow rate predictions of the primary, expansion & PPL flow rate calculations. Hence, every DP meter with an added downstream pressure tap ($P_3$) is potentially three flow meters in one body. Inter-comparison of these flow rate predictions produces three diagnostic checks. There are three read DP ratios, i.e., the 'PLR' ($\Delta P_{PPL}/\Delta P_t$), the PRR ($\Delta P_r/\Delta P_t$), the RPR ($\Delta P_r/\Delta P_{PPL}$). DP meters have predictable reproducible DP ratios. Therefore, comparison of each read to expected DP ratio produces three diagnostic checks.

An 8th diagnostic check is monitoring the stability (signal fluctuations) of the three DP readings and associated diagnostic parameters [4]. These eight checks, i.e three flowrate comparisons, three DP ratio comparisons to known baselines, the DP sum, and the signal / parameter stability check, create a 'diagnostic suite' whose output creates a diagnostic pattern. Pattern recognition allows the source of varous meter malfunctions to be predicted. Rather than primary malfunction identification, once the other seven diagnostic checks have identified a problem, the eighth diagnostic is primarily used to aid pattern recognition.

This DP meter validation system is specifically the use of a third downstream pressure tap, to facilitate the reading of two or three DPs, instead of the standard meter's single DP reading, such that the extra information can specifically be used to create a DP meter validation tool. The three flowrate predictions are in effect a check meter system. The expansion and PPL meter flowrate predictions are only used to verify the primary meter, they are not used in anyway to finely adjust and lower the uncertainty of the overall metering system's flowrate prediction. The system states if the primary meter is fully operational, or if it has malfunctioned. If it has malfunctioned it will give guidance via diagnostic pattern recognition on what the problem may be. It does not in any way attempt to reduce the overall system flow rate prediction uncertainty.

### 2.3. A DP Meter Wet Gas / Two Phase Flow System

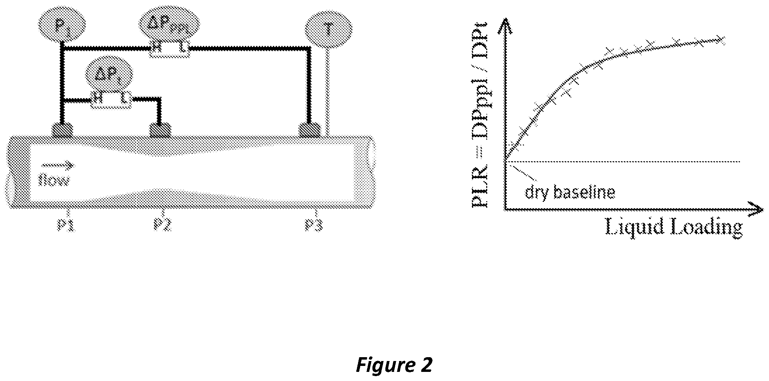

The Steven teachings [3] are specifically on producing a DP meter with a comprehensive diagnostic / valiation system. This is achieved with use of a non-standard 3rd pressure tapping downstream of the flow meter with one or two extra DP transmitters. Distinctly, for the specific case of a known wet gas / two-phase flow metering application, De Leeuw [5] described the use of a Venturi DP meter with a downstream pressure tap (see Figure 2) to read the primary and permanent pressure loss DPs. The resulting DP ratio (the 'Pressure Loss Ratio, 'PLR') is sensitive to the wet gas flow's liquid loading. This allows the amount of liquid to be estimated and a wet gas correction factor to be applied. Various R&D has been conducted by industry on this specific wet gas flow metering idea with different DP flow meter designs. However, this concept is not relevant to the flow metering of single phase fluid flows, and hence has not been considered for use in reducing the single phase fluid flow prediction uncertainty.

Some wet gas meter designs use two dissimilar meters in series. The two separate gas flow meters have two distinctly different reactions to the presence of wet gas flow. Cross-referencing the two meter's known reaction to wet gas flow produces a gas and liquid flowrate prediction. However, these wet gas meter designs are not in any way used to improve on single phase flow metering performance.

### 2.4 A Vortex Meter / Cone Meter Hybrid Meter

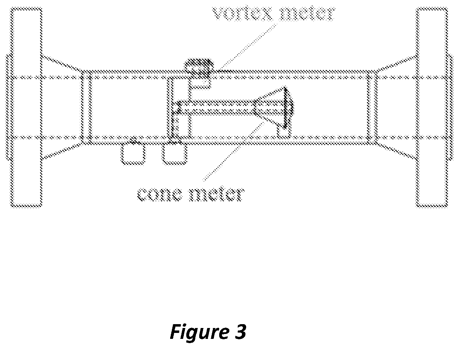

Steven's teachings [6] disclosed a hybrid meter system that combines a vortex meter and cone DP meter (Figure 3). This is a specific example of a Boden [7] mass flow meter design. Boden taught that cross-referencing of a density sensitive volume meter (e.g. a DP meter), and a density insensitive meter (e.g. a turbine, ultrasonic, or vortex meter) produces a density prediction. Combing the density insensitive meter's volume flowrate prediction with this density prediction produces a mass flowrate prediction. The Boden concept is a mass meter design, i.e. a flow meter that can predict the mass flow without requiring an externally obtained fluid density input. However, although Boden metering system designs (such as Figure 3) consist of two flow meter designs in series, or two flow metering principles in one meter body, they are not in any way used to reduce the flow metering systems fluid flow prediction uncertainty.

### 2.5 Pipe Network MLU

Most industrial processes in which flow meters are used are large and complex. These processes are carried out by pipe networks with multiple components spread throughout the system. This consists of multiple valves (of different designs and settings), various pressure and temperature sensors, densitometers, de-humidifiers, heat exchangers, multiple flow meters (often of different types) etc.

It is important that the process be optimized, i.e. be as efficient as possible. Each instrument output or device setting in the network is a node, i.e. a single piece of information. However, the resulting massed data from the pipe network is never perfect. All instrumentation has inherent uncertainty. Hence, the combined data coming from the various instrumentation may not match perfectly, e.g. the mass flow balance over the pipe network may not precisely add up. This is an indicator that the unavoidable uncertainties in the instrumentation outputs are leading to the operator only having an approximate idea of the state of the process. And with imperfect information regarding the process, it is not possible to ensure optimum process efficiency. Therefore, industry uses forms of 'MLU' (Maximum Likelihood Uncertainty).

MLU comprises various mathematical techniques that combine a process system's multiple independent instrumentation measurements, equipment settings, associated uncertainties, and physical laws, to automatically validate data (i.e. finely adjust measured outputs) in order to reconcile measurements. The techniques transform raw and sometimes inconsistent data sets into a single consistent data set. Hence, 'MLU' techniques produces a single set of process data that most probably represents the true process conditions. The operator obtains a more precise understanding of the state of the process system, and can then make better decisions about achieving and maintaining optimum process efficiency.

Industry MLU techniques are used on complex systems on a macro scale. Each individual instrument output, including flow meter system's output are seen as individual nodes (i.e. data values) in the overall process system. If any instrument is off line, or clearly erroneous, the MLU techniques can derive the missing information from the massed data and governing physical laws. However, MLU techniques are not applied in the micro scale, i.e. within the inner workings of individual instruments, and they are not applied within individual flow meter systems.

3. Improvements on the Basic Techniques for Flow Meter Validation

Industry does not apply MLU techniques to individual flow metering systems. Two meters in series (e.g. check metering or a Boden design) making up a metering system do not have MLU applied. A stand-alone flow meter with the extra information that is derived from its associated diagnostic system measurements does not have MLU techniques applied. When MLU techniques are applied over pipe networks, the only involvement of flow meters is the standard output of each metering system being used, along with all other instrumentation outputs, as nodes in the overall pipe network MLU technique. The flow meter system is not in itself subject to MLU techniques.

In this disclosure the technique of MLU applied on the macro scale to full pipe networks, is introduced to the micro scale of individual flow metering systems. For flow metering systems with multiple sensors this invention cross-references these sensor readings to reduce the flowrate prediction uncertainty. The result is a significant improvement of flow meter performance, including a reduction in flowrate prediction uncertainty. This reduces custody transfer metering financial exposure, and it makes flowrate critical processes more efficient.

Take two (or more) dissimilar meters in series, or a hybrid meter design, or a single flow meter type with extra select measurements by additional instrumentation (optionally from a diagnostic / validation system). With this extra information of these combined sensors, apply physical law 'constraints' / 'boundary conditions', and apply mathematical methods to carry out MLU techniques to reduce any raw measurement inaccuracies. The method is the adaptation of general industrial process data validation and MLU techniques to the microcosm of flow meter systems. It extracts from this extended flow metering system the most probable flow conditions, i.e. a lower uncertainty more reliable flowrate prediction.

3.1 MLU Techniques

Consider two flow measuring devices installed in series which are measuring the same mass flowrate. Since both devices have inherent uncertainty, they will report different flowrates (only slightly different if the devices are of good quality). The true mass flow is not known with absolute precision. Each device, if functioning correctly, will report the flow within the bounds of its stated uncertainty in accordance with the probability upon which the uncertainty bounds are specified. Typically, uncertainties are quoted at the 95% confidence level, which means that the reported mass flow will be within 1.96 standard deviations of the true value with 95% probability. Each device exhibits an uncertainty in its reported flow. The two measuring devices may have different uncertainties. The device with the lower uncertainty is more likely to be closer to the true value, but this is not guaranteed. That is, the device with the larger uncertainty may sometimes be closer to the true value than the device with the lower uncertainty. However, for steady flow the physical law of conservation of mass states that the true mass flow passing through both meters in series is known with absolute certainty to be the same.

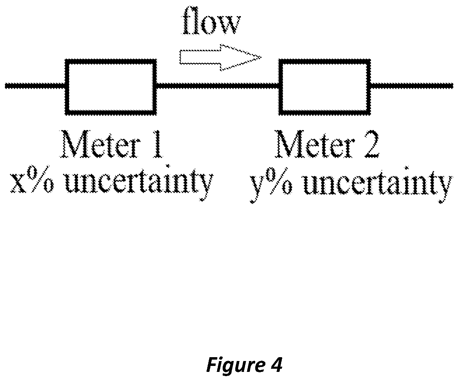

If one flow meter's flow prediction is assumed to be the most representative of the true flow (i.e. usually the flow meter with the lower uncertainty) and the other flow meter's flow prediction is ignored, then information about the true flow is being discarded. This additional information being ignored is in the form of the second measurement of the true flow, and the physical fact that the two meters are metering the same flowrate. The industries method of check metering does just this (See Figure 4). Once the check meter is seen to agree with the primary meter within the combined meter uncertainties, often set as the root sum square value of the two meter uncertainties, the primary meter's correct operation is seen as confirmed. Presently, industry makes no more use of the check meter information, and simply uses the primary meter output with its stated uncertainty. This is even true for paired reference flow meters in series at flow meter calibration facilities.

This proposed method utilizes the information from both flow meters, and the knowledge that they are measuring the same true flow, in such a way as to generate a model where mathematics probability theory can be applied to produce a statistical maximum likelihood estimate of that true flow given the available data. This statistical maximum likelihood estimate of that true flow is statistically more likely to be closer to the true flowrate value than either of the two input flowrate predictions. Furthermore, this maximum likelihood estimate flowrate prediction also has a lower associated uncertainty than either of the two individual flowrate predictions.

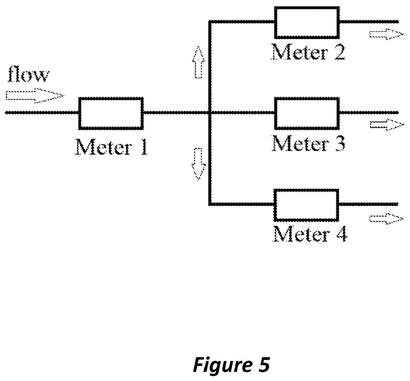

The method can be extended to include more than two flow measurement devices in series. The method can even be extended to flow measurement devices in parallel as long as mass conservation relates their combined measured flows. An example would be one meter upstream of a pipe tee, and a meter on each of the branching lines downstream (e.g. see Figure 5). Mass conservation for steady flow dictates that the sum of the mass flowrates through the branch line meters in parallel equates to the mass flowrate before the branch, i.e. $m_1 = m_2 + m_3 + m_4$.

Indeed, the method is not restricted to the conservation of mass flow, or volume flow for constant density, or for a known fluid composition the equivalent of conservation of energy flow or mole component flow rate. It can be extended to utilize other relevant laws of physics. One example, which is exploited in this disclosure, is the rule of 'the equivalence of measured pressure differentials'.

The method is applicable to gas and liquid flows.

The method termed 'MLU' is the combination of a system's multiple instrumentation readings, associated uncertainties, governing physical laws, and mathematical techniques, to automatically validate data and reconcile measurements such that the whole complies with the physical laws (such as conservation of energy, conservation of mass, or other laws related to these physical principles) and is statistically optimal in the reconciled values and their associated uncertainties. The technique can improve best estimates of not just measured system variables but even unmeasured variables.

The technique transforms raw and sometimes inconsistent data sets into a single consistent data set representing the most likely truth.

MLU techniques are typically used by the hydrocarbon production industry for product allocation in complex pipe networks owned by many parties or process plants where there are multiple independent measurements of distinct hydrocarbon streams. This macro system can be used to validate measurements as being compatible with respect to uncertainties and the relevant constraints, or to detect gross instrumentation errors. In this disclosure the technique often applied on this macro scale is introduced to the micro scale of flow meter systems.

A simple example is now presented to illustrate the method of combining two independent flow measurements to derive an adjusted measurement with a reduced associated uncertainty.

### 3.1.1 Two independent meters in series

Consider a system with two independent flow meters in series both measuring the same mass flowrate. These meters can be similar or dissimilar. Each meter is independent of the other in terms of the inputs used to calculate the mass flow. Denoting the first meter as meter 1, its mass flow prediction is denoted as $\dot{m}_1$. Denoting the second meter as meter 2, its mass flow prediction is denoted as $\dot{m}_2$. Each meter's reported mass flow will have an uncertainty associated with it denoted by $U\dot{m}_1$ and $U\dot{m}_2$ respectively. These uncertainties are absolute and are related to the relative uncertainties $\varepsilon\dot{m}_1$ and $\varepsilon\dot{m}_2$ by equations (5) and (6):

$$U\dot{m}_1 = \varepsilon\dot{m}_1 * \dot{m}_1 \qquad (5)$$

$$U\dot{m}_2 = \varepsilon\dot{m}_2 * \dot{m}_2 \qquad (6)$$

Both sets of uncertainties are expressed at some stated confidence level (usually 95%) and follow normal distributions. The probability density function below describes the probability of how the measured flow differs from the true flow $\dot{m}_t$:

$$Pd_1(\dot{m}_t \mid \dot{m}_1, \sigma_1) = \frac{1}{\sqrt{2\pi\sigma_1{}^2}} e^{-\left(\frac{(\dot{m}_t - \dot{m}_1)^2}{2\sigma_1{}^2}\right)} \qquad (7)$$

Where,

$Pd_1$     Probability density for the 1st meter

$\dot{m}_t$      True mass flow

$\sigma_1$      Standard deviation of the 1st meter mass flow

The standard deviation is related to the 95% measurement uncertainty by:

$$U\dot{m}_1 = 1.96 * \sigma_1 \tag{8}$$

A similar expression describes the probability density of the 2nd meter:

$$Pd_2(\dot{m}_t \mid \dot{m}_2, \sigma_2) = \frac{1}{\sqrt{2\pi\sigma_2{}^2}} e^{-\left(\frac{(\dot{m}_t - \dot{m}_2)^2}{2\sigma_2{}^2}\right)} \tag{9}$$

The product of these two probability density functions describes the probability of how the true value differs from the two measured values.

$$Pd_2(\dot{m}_t \mid \dot{m}_2, \sigma_2)Pd_1(\dot{m}_t \mid \dot{m}_1, \sigma_1) \tag{10}$$

$$= \frac{1}{\sqrt{2\pi\sigma_2{}^2}} e^{-\left(\frac{(\dot{m}_t - \dot{m}_2)^2}{2\sigma_2{}^2}\right)} \frac{1}{\sqrt{2\pi\sigma_1{}^2}} e^{-\left(\frac{(\dot{m}_t - \dot{m}_1)^2}{2\sigma_1{}^2}\right)}$$

This product of probabilities can be differentiated with respect to the true value and set to zero to find the most probable estimate of the true value given the two measured flows and their associated uncertainties. This most probable estimate of the true flow is termed the reconciled mass flowrate $\dot{m}_r$. It is more mathematically convenient to work with the negative of the natural logarithm of the probability densities. Since the logarithm is a monotonic transformation, its maximum will correspond with that of the product of the probability densities.

$$L = -\ln\left(\frac{1}{\sqrt{2\pi\sigma_2{}^2}} e^{-\left(\frac{(\dot{m}_t - \dot{m}_2)^2}{2\sigma_2{}^2}\right)} \frac{1}{\sqrt{2\pi\sigma_1{}^2}} e^{-\left(\frac{(\dot{m}_t - \dot{m}_1)^2}{2\sigma_1{}^2}\right)}\right) \tag{11}$$

Therefore,

$$L = -\ln\left(\frac{1}{\sqrt{2\pi\sigma_2{}^2}} \frac{1}{\sqrt{2\pi\sigma_1{}^2}}\right) + \left(\frac{(\dot{m}_t - \dot{m}_2)^2}{2\sigma_2{}^2}\right) + \left(\frac{(\dot{m}_t - \dot{m}_1)^2}{2\sigma_1{}^2}\right) \tag{12}$$

Differentiating:

$$\frac{dL}{d\dot{m}_t} = \left(\frac{(\dot{m}_t - \dot{m}_2)}{\sigma_2{}^2}\right) + \left(\frac{(\dot{m}_t - \dot{m}_1)}{\sigma_1{}^2}\right) \tag{13}$$

When this differential equals zero $\dot{m}_t = \dot{m}_r$ and rearranging in terms of $\dot{m}_r$:

$$\dot{m}_r = \frac{\sigma_1{}^2\dot{m}_2 + \sigma_2{}^2\dot{m}_1}{\sigma_2{}^2 + \sigma_1{}^2} \tag{1}$$

Or in terms of the uncertainties:

$$\dot{m}_r = \frac{U\dot{m}_1{}^2 \dot{m}_2 + U\dot{m}_2{}^2 \dot{m}_1}{U\dot{m}_2{}^2 + U\dot{m}_1{}^2} \tag{2}$$

The uncertainty in this reconciled flow can also be determined using the Taylor Series Method (TSM) for the propagation of errors described in the "Guide to the Expression of Uncertainty in Measurement", aka "the GUM" [8]. The sensitivity coefficients are given by:

$$\frac{\partial \dot{m}_r}{\partial \dot{m}_2} = \frac{U\dot{m}_1{}^2}{U\dot{m}_2{}^2 + U\dot{m}_1{}^2} \tag{16}$$

And,

$$\frac{\partial \dot{m}_r}{\partial \dot{m}_1} = \frac{U\dot{m}_2{}^2}{U\dot{m}_2{}^2 + U\dot{m}_1{}^2} \tag{17}$$

$$U\dot{m}_r = \left( \left(\frac{\partial \dot{m}_r}{\partial \dot{m}_1}\right)^2 U\dot{m}_1{}^2 + \left(\frac{\partial \dot{m}_r}{\partial \dot{m}_2}\right)^2 U\dot{m}_2{}^2 \right)^{0.5} \tag{18}$$

Substituting for the partial differentials:

$$U\dot{m}_r = \left( \left(\frac{U\dot{m}_2{}^2}{U\dot{m}_2{}^2 + U\dot{m}_1{}^2}\right)^2 U\dot{m}_1{}^2 + \left(\frac{U\dot{m}_1{}^2}{U\dot{m}_2{}^2 + U\dot{m}_1{}^2}\right)^2 U\dot{m}_2{}^2 \right)^{0.5} \tag{19}$$

After simplification:

$$U\dot{m}_r = \frac{U\dot{m}_2 U\dot{m}_1}{\left(U\dot{m}_2{}^2 + U\dot{m}_1{}^2\right)^{0.5}} \tag{20}$$

Inspection of this result reveals that the uncertainty in the reconciled flow is always less than either of the uncertainties in the individual meter measurements. If the above is reexpressed as:

$$U\dot{m}_r = x * U\dot{m}_2 \tag{21}$$

Where the factor x is given by:

$$x = \frac{U\dot{m}_1}{\left(U\dot{m}_2{}^2 + U\dot{m}_1{}^2\right)^{0.5}} \tag{22}$$

x is always less than 1, unless $U\dot{m}_2=0$ or $U\dot{m}_1=\infty$, when x equals 1. Hence, $U\dot{m}_r$ is always less than $U\dot{m}_2$, for any real meter. A similar argument proves that $U\dot{m}_r$ is always less than $U\dot{m}_1$. Hence, for any real meter, $U\dot{m}_r$ is always less than either meter's uncertainty.

The principle is that the higher uncertainty measurement does contain independent additional information, and even if it is less accurate than the lower uncertainty information, when the information is combined, the higher uncertainty additional information supplements the lower uncertainty information, which inherently reduces the overall measurement uncertainty.

The invention is not restricted to one computational method or type of meter. Wherever a system is designed with multiple sensor inputs various mathematical (computational) approaches can be used to combine measurements optimally, giving reconciled finely adjusted more accurate outputs with reduced uncertainty compared to the initial inputs. Hence, although any suitable mathematical (computational) method would suffice, the text uses MLU techniques as an arbitrary example.

Example 1:

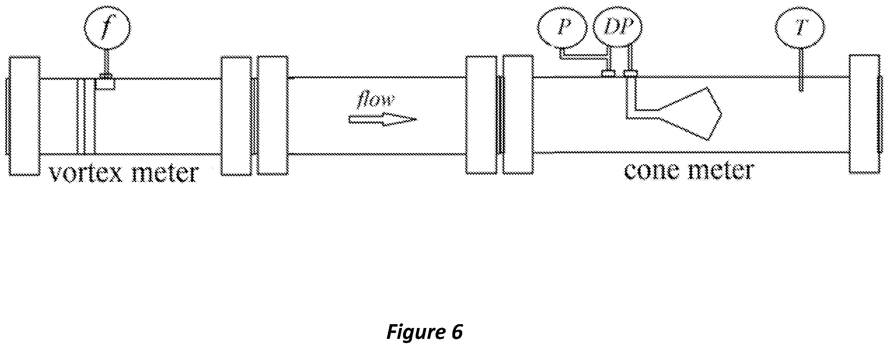

As way of an example let us now derive the reconciled mass flow rate and its uncertainty for a single-phase flow measured by two meters in series. In this arbitrary example, independent flow rate measurements are made by a vortex meter and a cone meter in series (see Figure 6).

Applying equations 15 the reconciled mass flow rate is given by

$$\dot{m}_r = \frac{U\dot{m}_1{}^2\dot{m}_2 + U\dot{m}_2{}^2\dot{m}_1}{U\dot{m}_2{}^2 + U\dot{m}_1{}^2} \qquad (15)$$

And the uncertainty of the reconciled mass flow rate is given by equation 20

$$U\dot{m}_r = \frac{U\dot{m}_2 U\dot{m}_1}{\left(U\dot{m}_2{}^2 + U\dot{m}_1{}^2\right)^{1/2}} \qquad (20)$$

The results of applying this approach to a vortex meter and cone meter operating in series are shown below. The data is from a 6", schedule 80, gas flow laboratory with the vortex meter upstream of the DP cone meter. The meters were separated by a short spool piece. The data consist of points at nominally 60 bar and 15 bar. The standalone cone meter had a mass flow prediction uncertainty of 0.6%. The standalone vortex meter had a mass flow prediction uncertainty of 0.75%. After this method is applied the reconciled mass flowrate prediction uncertainty is reduced to 0.47%, i.e. the combined metering system has a lower mass flowrate uncertainty than either individual meter.

Table 1. Vortex and Cone Meter in Series with Applied MLU.

| Data Point | Cone Meter Rel. Uncertainty=> 0.60% | | Vortex Meter Rel. Uncertainty=> 0.75% | | Reconciled | | |
|---|---|---|---|---|---|---|---|
| | Measured Flow kg/s | Abs. Uncertainty ±kg/s | Measured Flow kg/s | Abs. Uncertainty ±kg/s | Flow ±kg/s | Abs. Uncertainty ±kg/s | Rel. Uncertainty ±% |
| 1 | 3.118 | 0.019 | 3.115 | 0.023 | 3.117 | 0.015 | 0.47% |
| 2 | 7.807 | 0.047 | 7.777 | 0.058 | 7.796 | 0.037 | 0.47% |
| 3 | 4.208 | 0.025 | 4.193 | 0.031 | 4.202 | 0.020 | 0.47% |
| 4 | 4.223 | 0.025 | 4.203 | 0.032 | 4.215 | 0.020 | 0.47% |
| 5 | 5.323 | 0.032 | 5.312 | 0.040 | 5.319 | 0.025 | 0.47% |
| 6 | 5.326 | 0.032 | 5.317 | 0.040 | 5.323 | 0.025 | 0.47% |
| 7 | 11.794 | 0.071 | 11.762 | 0.088 | 11.781 | 0.055 | 0.47% |
| 8 | 20.142 | 0.121 | 20.226 | 0.152 | 20.175 | 0.095 | 0.47% |

Say this metering system was for natural gas custody transfer. At 60 Bar and 20°C, the standalone cone DP meter would predict a gas mass flow of 20.142 kg/s ± 0.6% (see point 8 in Table 1). In terms of Million Standard Cubic Feet per Day (MMSCFD), this is a custody transfer result of 83.48 MMSCFD ± 0.50 MMSCFD. Considering the typical gas calorific value of 1000 BTU/SCF (with 1 MMSCFD = 28316.9 std m$^3$ per day and 1 million BTU = 293 kWh), and a gas price of $2.50 per million BTU, this is an annual flow value of $76.18 million ± $457K. The traditional method of metering the flow uses a single meter's uncertainty value. If the cone meter stood alone in the pipe this result would be used without any check meter verification. If there were two meters in series for check metering the standard practice is to use the meter with the lower uncertainty for billing, i.e. in this example the cone meter at 0.6% uncertainty. However, if this MLU technique is applied it is proven that the flow prediction and its associate uncertainty needs finely adjusted to 20.175 kg/s ±0.47% (see point 8 in Table 1). The custody transfer metering result has shifted to 83.62 MMSCFD ± 0.39 MMSCFD, i.e. an annual flow value of $76.30 million ± $359K. That is, the primary flowrate has been finely altered by +0.14 MMSCFD, i.e. a billing alteration of +$127.775K per annum, while the uncertainty in the flow metering system output has dropped by 0.13% from ± $457K to ± $359K per year, i.e. exposure to flow metering uncertainty is reduced by $98,000 per year.

This example utilized the method for the case where there were two independent metering systems in series (see Figure 6). The method will work regardless of whether the two (or more) flow meters are similar or dissimilar design. This example of two independent dissimilar flow meters in series is applicable in industry in several scenarios. It would work with check metering, it will work when a buyer and seller have separate meters in series, and it will work with hybrid meter designs, such as the vortex and cone meter combination in Figure 3.

A hybrid meter is one where two different metering measurements are made by sharing at least some physical components. Figure 3 shows an example of a hybrid meter produced by two dissimilar meters. However, some ultrasonic meter (USM) systems have more than one 'ultrasonic meter system' in the same meter body. This could be described as a hybrid of two distinct independent ultrasonic meter designs sharing the same upstream flow conditioner and the same meter body. As ultrasonic meters are described by their number of paths, such designs are called by the two ultrasonic meter's number of paths. For example, a 4+1 ultrasonic metering system indicates one embedded four path ultrasonic metering system and one embedded one path ultrasonic metering system installed together in one meter body. Some ultrasonic meter designs have 'bounce paths' where the transducer pair are not directly opposite from each other but send and receive signals by bouncing the ultrasonic wave off the wall. This makes no difference to the application of this technique.

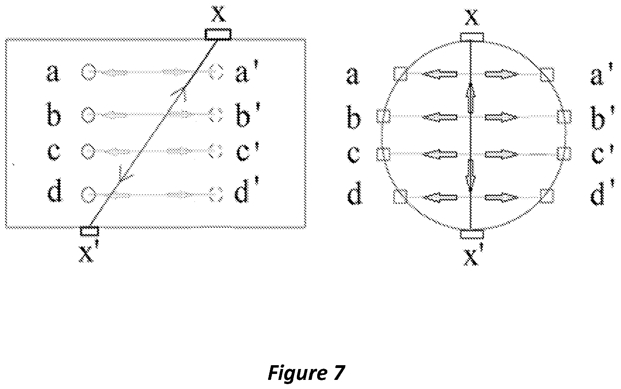

Figure 7 shows an example of a 4+1 ultrasonic meter design. The 4 path chordal design has four paths created by transducer pairs a & a', b & b', c & c', d & d'. This four path chordal design typically has its own dedicated flow computer (or 'head'). The 1 path design has a path created by transducer pairs x & x'. This one path design typically has a separate dedicated flow computer (or 'head'). That is the two ultrasonic metering systems are independent. Ultrasonic meter manufacturers use such meter designs to give an extra level of system redundancy, e.g. check metering, and to offer an extra diagnostic capability (e.g. the 1 path meter may be positioned in the vertical axis and can therefore be adversely affected by problems such as contamination or liquids at the base of the meter before the four path meter diagnostic system can see the problem). There is no attempt by ultrasonic meter manufacturers to cross reference the two (or more) independent meters in order to reduce the overall system flowrate prediction uncertainty. However, any such ultrasonic metering system with two such systems (e.g. 4+1, 4+2, 4+4 etc.) could be developed to utilize this uncertainty reduction method. The next example shows the method being applied to 4+1 path ultrasonic meter data.

Example 2:

Consider the case of a 4+1 path ultrasonic meter. There are various common path configurations, such as 4+1, 4+2, 4+4 etc. The method discussed here works for all such ultrasonic meter configurations.

The 4-path and 1-path measured flow rates are treated as being independent. Ultrasonic meters are used to determine the volume flow rate. Ancillary calculations are applied to derive the fluid density from which a mass flow rate is then derived. However, as the two volume meters are embedded in the same meter body at the same flow conditions the fluid density is the same for both meters and hence there is the same mass flow and the same volume flow past the two meters. The reconciliation calculations equations 15 and 20 apply in any situation where the same quantity is independently measured by different means. Thus, a reconciled volume or mass flow rate can be derived and its uncertainty calculated. Equations 15 and 20 can then be applied to obtain a reconciled volume or mass flow rate.

Table 2. 4+1 Ultrasonic Meter with Applied Uncertainty Reduction Method.

| Data Point | USM 4-path | USM 4-path | USM 1-path | USM 1-path | | | |
|---|---|---|---|---|---|---|---|
| | Rel Uncert | 0.5% | Rel Uncert | 0.6% | Reconciled | Reconciled | Reconciled |
| | Measured Flow | Abs. Uncert | Measured Flow | Abs. Uncert | Flow | Abs. Uncert | Rel. Uncert |
| | kg/s | kg/s | kg/s | kg/s | kg/s | kg/s | % |
| 1 | 5.321 | 0.027 | 5.327 | 0.032 | 5.323 | 0.020 | 0.38% |
| 2 | 4.708 | 0.024 | 4.713 | 0.028 | 4.710 | 0.018 | 0.38% |
| 3 | 4.163 | 0.021 | 4.143 | 0.025 | 4.155 | 0.016 | 0.38% |
| 4 | 3.582 | 0.018 | 3.583 | 0.021 | 3.582 | 0.014 | 0.38% |
| 5 | 2.972 | 0.015 | 2.975 | 0.018 | 2.973 | 0.011 | 0.38% |
| 6 | 2.366 | 0.012 | 2.368 | 0.014 | 2.367 | 0.009 | 0.38% |
| 7 | 1.767 | 0.009 | 1.769 | 0.011 | 1.768 | 0.007 | 0.38% |
| 8 | 1.154 | 0.006 | 1.155 | 0.007 | 1.154 | 0.004 | 0.38% |

The results of applying this approach to a real 4+1 path USM are shown in Table 2. This data comes from an 8", schedule 80 flow meter tested at a natural gas flow laboratory. The data consist of points nominally at 15 Bar. The calibrated 4 path and 1 path USM relative volume uncertainties were subsequently set (by consideration of the ISO 17089-1 ultrasonic meter standard uncertainty examples) as 0.5% and 0.6% respectively. In this particular example the shift in mass flowrate prediction is marginal, but the method reduces the flowrate uncertainty from the 4-path ultrasonic meter's 0.5% to 0.38%.

The data in Table 2 is for a rather low pressure and as a consequence the mass flowrate is low and the financial value of the flow relatively modest. However, the result is indicative of any 4+1 (or 4+2, 4+4 etc.) ultrasonic meter in that the flowrate prediction can be finely adjusted and the flowrate uncertainty can be significantly reduced. For many higher value custody transfer flows the advantages of this can be significant.

This example utilized the method for the case where the metering system inherently had two pre-existing independent but similar metering systems to compare. However, most standalone meters do not have two such independent sub-system flowrate predictions as a standard commercial offering. However, it is sometimes possible to add a supplemental system (or systems) to produce a second flowrate prediction. The next example shows a case where a standard flow meter with no inherent suitable extra instrumentation is modified to produce a second flow meter system such that the method can be applied.

Example 3:

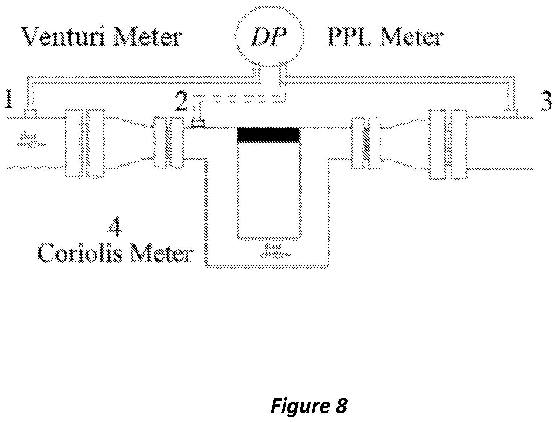

Coriolis meters produce a single mass flowrate prediction. Standard Coriolis meters have no second mass flow prediction in which to apply this method. But a second mass flowrate prediction can be created. The permanent pressure loss can be read across the Coriolis meter, see Figure 8.

This permanent pressure loss is directly related to the fluid velocity, and therefore the mass flow. The mass flowrate can therefore be calculated from this read permanent pressure loss DP. This flow metering concept is fundamentally the same as that discussed in the DP meter diagnostic / validation section 2.2. Equation 4 is applicable for the permanent pressure loss across any pipe obstruction, DP meter and Coriolis meter inclusive. Hence, reading the permanent pressure loss across the Coriolis meter, i.e. the differential pressure between pressure taps 1 and 3 (see Figure 8), creates a second independent mass flowrate prediction. Furthermore, some Coriolis meters are installed with a reduced bore assembly, see Figure 8. In this scenario there is the option to read the differential pressure across the reduction in bore, i.e. the differential pressure between pressure taps 1 and 2, thereby effectively creating an upstream Venturi meter.

Hence, say a Coriolis meter is calibrated to have a gas mass flowrate of 0.5%. This is a typical Coriolis meter uncertainty. The permanent pressure loss across a typical Coriolis meter is such that a calibrated permanent pressure loss Coriolis flow meter could have an uncertainty of 0.75%. Carrying out the MLU technique produces a reconciled (finely adjusted) flowrate prediction, and drops the uncertainty to 0.42%.

For the specific case of a reduced bore flow meter design there is always the option to read the three DPs across the three pressure taps. This is in effect the same as the Venturi meter set up shown in Figure 1 with the addition of there being a flow meter such as a Coriolis, ultrasonic or turbine meter etc. in the Venturi throat. Figure 8 shows the example of a Coriolis / Venturi meter hybrid meter. This would give three DP related flowrate predictions, to combine with the Coriolis meter flow prediction, but these DP meter predictions are not wholly independent of each other. Indeed, this is the case for the standard Venturi meter (and all DP meters such as the orifice, nozzle, cone, wedge DP meter etc.) with the three DPs as shown in Figure 1. However, the above method of reducing uncertainty describes a linear system with one unknown and uncorrelated measurement uncertainties. If uncertainties are correlated (as in Section 2.2) the method can be extended to account for these correlations according to the GUM. This is now addressed. The method is now extended to include non-linear systems with multiple unknown variables with potentially correlated uncertainties.

3.1.2 Flow Meters with Multiple Dependent Measurements

For differential pressure meters such as orifice, nozzle, Venturi, cone, and wedge DP meters (i.e. ISO 5167 Parts 2, 3, 4, 5, & 6 [1]) this technique can be applied if the system has multiple (two or more) DPs read, as described in Section 2.2, and shown in Figure 1. This prior art specifically discusses DP meter diagnostic / verification system. However, herein it is disclosed that this 'Maximum Likelihood Uncertainty' system can be applied to a DP meter with such read DPs. This addition can be an add on to this diagnostic system. Or it can be independent of the diagnostic system. That is, if the diagnostic system is present, once the diagnostic system verifies the meter is operating correctly, the Maximum Likelihood Uncertainty' system can then reduce the metering system's uncertainty. However, most flow meters are operated without diagnostic systems. Hence, the extra DP transmitter/s could be added to any DP meter without the diagnostics system, the meter can be assumed to be working correctly, and the Maximum Likelihood Uncertainty system will then reduce the metering systems flowrate prediction uncertainty.

The prior art diagnostic system requires a standard DP meter, and then a non-standard geometry change of a third pressure tapping downstream of the meter, and the addition of one or two extra DP transmitters, for the specific reason of producing redundant flowrate predictions, and applying diagnostic algorithms to check the health of the meter.

This disclosure provides a standard DP meter, and then a non-standard geometry change of a third pressure tapping downstream of the meter, and the addition of one or two extra DP transmitters, for the distinctly different specific reason of applying MLU algorithms to reduce a correctly operating metering system's overall flowrate prediction uncertainty.

This prior art system and the different system of this disclosure can be used together or completely independently of each other.

The present disclosure involves use of multiple instruments in conjunction with physical laws to reduce the metering system's overall uncertainty. For the specific case of a DP meter with three DPs (as shown in Figure 1) the multiple instruments are reading different but related signals, i.e. the three DPs are all 'dependent' on the meter body's pressure field. In this document the general term 'dependent' is here defined as systems of flow rate predictions that share some, or all, of a common set of input variables. Whereas a metering system with instrument readings which are dependent on each other is more complex than when they are independent, the fundamental principle remains the same.

The following is one example of the more complex mathematics required for the case where constraints are nonlinear in the measured, calibrated and unmeasured variables. It is also suitable where the instrument readings are not wholly independent. However, it is an example only, and the fundamental principle holds true if a different mathematical method was chosen.

| | | |
|---|---|---|
| Traditional flow calculation: | $m_{trad} = \left(A\beta^2 \Big/ \sqrt{1-\beta^4}\right) Y C_d \sqrt{2\rho\Delta P_t}$ , | --- (2a) |
| Expansion flow calculation: | $m_{exp} = \left(A\beta^2 \Big/ \sqrt{1-\beta^4}\right) K_r \sqrt{2\rho\Delta P_r}$ , | --- (3a) |
| PPL flow calculation: | $m_{PPL} = A K_{PPL} \sqrt{2\rho\Delta P_{PPL}}$ , | --- (4a) |

The MLU technique still applies and is explained here by applying 'nonlinear constrained weighted least squares optimization'. Equation set 2a, 3a, and 4a are the expanded versions of the DP meter Equation set 2, 3, and 4, where $A$ and $\beta$ are geometry terms, $\rho$ denotes fluid density, $Y$ denotes the expansion factor, and $C_d$, $K_r$, and $K_{PPL}$ are the DP meter flow coefficients We wish to find optimal values for the measured, derived, or calibrated variables:

$$x = [\Delta P_t \quad \Delta P_r \quad \Delta P_{PPL} \quad Y \quad C_d \quad K_r \quad K_{PPL} \quad \rho]^T \qquad (23)$$

and unmeasured variable

$$u = [m] \qquad (24)$$

where the optimum is found by minimizing, the sum over all measured variables,

$$S = \sum_i \left( \frac{\hat{x}_i - x_i}{\sigma_{x_i}} \right)^2 \qquad (25)$$

Table 5. Calculation Nomenclature

| $x$ | (Input) vector of measured data ($n\times 1$). |
|---|---|
| $\hat{x}$ | (Calculated) vector of reconciled measured data ($n\times 1$). |
| $u$ | (Input) vector of unmeasured data ($p\times 1$). |
| $\hat{u}$ | (Calculated) vector of reconciled unmeasured data ($p\times 1$). |
| $V$ | Covariance matrix for $x$ ($n\times n$). The covariance of each element to itself is calculated from the square of the absolute uncertainty ($U$) of the measurement ($x$) divided by 2, $(U/2)^2$. The covariance of any element with any other element has been treated as zero because the quantities are independent. |
| $J_x$ | Jacobian matrix with respect to the measured variables(number of constraint equations $m\times n$). This contains the coefficients of the first derivatives of the constraints with respect to the measured variables. |
| $J_u$ | Jacobian matrix with respect to the **un**measured variables(number of constraint equations $m\times p$)). This contains the coefficients of the first derivatives of the constraints with respect to the unmeasured variables. |

subject to the physical law constraints (or 'boundary conditions') which are purely a re-expression of equation set 2a, 3a, and 4a.

$$\Phi = \hat{m} - m_{trad}\left( d, D, \hat{Y}, \hat{C}_d, \hat{\rho}, \Delta\hat{P}_t \right) = 0 \qquad (26)$$

$$\Xi = \hat{m} - m_{exp}\left( d, D, \widehat{K}_r, \hat{\rho}, \Delta\hat{P}_r \right) = 0 \qquad (27)$$

$$\Psi = \hat{m} - m_{PPL}\left( D, \widehat{K}_{PPL}, \hat{\rho}, \Delta\hat{P}_{PPL} \right) = 0 \qquad (28)$$

$$\Omega = \Delta\hat{P}_t - \Delta\hat{P}_r - \Delta\hat{P}_{PPL} = 0 \qquad (29)$$

Note that physical law constraints are linear or nonlinear functions expressible with some, or all, of a common (i.e. shared) set of input variables used in the flowrate predictions.

The constraints listed above could be augmented with inequality constraints to ensure calculations result in positive values for reconciled variables. For meters other than differential pressure meters the constraints would be dependent on the meter and relevant measured and unmeasured variables.

This approach is based on the assumption that the measured values are normally distributed about the true values. That is, $\hat{x} = x + \varepsilon$, where $\varepsilon \sim \mathcal{N}(0, \sigma_x)$. Since the constraints are nonlinear an iterative approach is applied, see Britt & Luecke [9]. This requires solving

$$u_{i+1} = u_i - (J_u^T(J_xVJ_x^T)^{-1}J_u)^{-1}J_u^T(J_xVJ_x^T)^{-1}(f(x,u_i) + J_x(x_i - x_0)) \tag{30}$$

$$x_{i+1} = x_0 - VJ_x^T(J_xVJ_x^T)^{-1}(f(x,u_i) + J_u(u_i - u_0) + J_x(x_i - x_0)) \tag{31}$$

where

$$f(x,u_i) = [\Phi \quad \Xi \quad \Psi \quad \Omega]^T \tag{31a}$$

is the vector of constraint imbalances calculated from the input vector of measured data, $x$, and the latest estimate, $u_i$, of unmeasured data according to equations (26) to (29).

The Jacobian matrices are

$$J_x = \begin{bmatrix} \dfrac{\partial\Phi}{\partial\Delta P_t} & \dfrac{\partial\Phi}{\partial\Delta P_r} & \dfrac{\partial\Phi}{\partial\Delta P_{PPL}} & \dfrac{\partial\Phi}{\partial Y} & \dfrac{\partial\Phi}{\partial C_d} & \dfrac{\partial\Phi}{\partial K_r} & \dfrac{\partial\Phi}{\partial K_{PPL}} & \dfrac{\partial\Phi}{\partial\rho} \\ \dfrac{\partial\Xi}{\partial\Delta P_t} & \dfrac{\partial\Xi}{\partial\Delta P_r} & \dfrac{\partial\Xi}{\partial\Delta P_{PPL}} & \dfrac{\partial\Xi}{\partial Y} & \dfrac{\partial\Xi}{\partial C_d} & \dfrac{\partial\Xi}{\partial K_r} & \dfrac{\partial\Xi}{\partial K_{PPL}} & \dfrac{\partial\Xi}{\partial\rho} \\ \dfrac{\partial\Psi}{\partial\Delta P_t} & \dfrac{\partial\Psi}{\partial\Delta P_r} & \dfrac{\partial\Psi}{\partial\Delta P_{PPL}} & \dfrac{\partial\Psi}{\partial Y} & \dfrac{\partial\Psi}{\partial C_d} & \dfrac{\partial\Psi}{\partial K_r} & \dfrac{\partial\Psi}{\partial K_{PPL}} & \dfrac{\partial\Psi}{\partial\rho} \\ \dfrac{\partial\Omega}{\partial\Delta P_t} & \dfrac{\partial\Omega}{\partial\Delta P_r} & \dfrac{\partial\Omega}{\partial\Delta P_{PPL}} & \dfrac{\partial\Omega}{\partial Y} & \dfrac{\partial\Omega}{\partial C_d} & \dfrac{\partial\Omega}{\partial K_r} & \dfrac{\partial\Omega}{\partial K_{PPL}} & \dfrac{\partial\Omega}{\partial\rho} \end{bmatrix} \tag{32}$$

The Jacobian matrix $J_x$ can be expressed as

$$J_x = \begin{bmatrix} J_{11} & 0 & 0 & J_{14} & J_{15} & 0 & 0 & J_{18} \\ 0 & J_{22} & 0 & 0 & 0 & J_{26} & 0 & J_{28} \\ 0 & 0 & J_{33} & 0 & 0 & 0 & J_{37} & J_{38} \\ 1 & -1 & -1 & 0 & 0 & 0 & 0 & 0 \end{bmatrix} \tag{33}$$

where,

$$J_{11} = -m_{trad}/2\Delta P_t \tag{33a}$$

$$J_{14} = -m_{trad}/Y \tag{33b}$$

$$J_{15} = -m_{trad}/C_d \tag{33c}$$

$$J_{18} = -m_{trad}/2\rho \tag{33d}$$

$$J_{22} = -m_{exp}/2\Delta P_r \tag{33e}$$

$$J_{26} = -m_{exp}/K_r \tag{33f}$$

$$J_{28} = -m_{exp}/2\rho \tag{33g}$$

$$J_{33} = -m_{PPL}/2\Delta P_{PPL} \tag{33h}$$

$$J_{37} = -m_{PPL}/K_{PPL} \tag{33i}$$

$$J_{38} = -m_{PPL}/2\rho \tag{33j}$$

and at each calculation iteration the values of the variables from the previous iteration are used to calculate the matrix elements in equation 33 (including $m_{trad}$, $m_{exp}$ and $m_{PPL}$, which will be calculated according to equations (2a), (3a) and (4a)).

$$J_u = \begin{bmatrix} \dfrac{\partial \Phi}{\partial \dot{m}} \\ \dfrac{\partial \Xi}{\partial \dot{m}} \\ \dfrac{\partial \Psi}{\partial \dot{m}} \\ \dfrac{\partial \Omega}{\partial \dot{m}} \end{bmatrix} \tag{34}$$

and the Covariance matrix V is

$$V = \begin{bmatrix} \sigma_{\Delta P_t}^2 & \cdots & 0 \\ \vdots & \ddots & \vdots \\ 0 & \cdots & \sigma_{\rho}^2 \end{bmatrix} \tag{35}$$

With the entries on the main diagonal given by the uncertainty in each of the measured variables or parameters.

Measured values are used as inputs to $x_0$ in the first iteration. An initial estimate of the mass flow rate used in the first iteration, $u_0$, can be set from any one, or any combination, of the traditional, recovered and PPL calculated mass flow rates, e.g. an arithmetic average or uncertainty weighted average.

Iteration stops when

$$\sum |u_{i+1} - u_i| \leq \delta \tag{36}$$

and

$$\sum |x_{i+1} - x_i| \leq \varepsilon \tag{37}$$

This disclosure adopted $\delta = \varepsilon = 10^{-6}$. The uncertainty in the combined mass flow rate is calculated as

$$\sigma_u = (J_u^T (J_x V J_x^T)^{-1} J_u)^{-1} \tag{38}$$

Although the method discusses single-phase flow metering only, it can be extended to include two-phase flow metering. This requires the introduction of additional two-phase variables to the metering system, such as Pressure-Loss-Ratio and Lockhart-Martinelli parameter following the teachings of de Leeuw [5] and Steven [17] in addition to those listed above, and the appropriate amount of redundant measurement systems to apply MLU methodology.

While the method of Britt and Luecke [9] is utilized here, any method which allows unmeasured variables and their associated uncertainty to be derived could be applied, such as that of Crowe [10].

Example 4: Calibrated Cone DP Meter with Pressure Field DP Readings

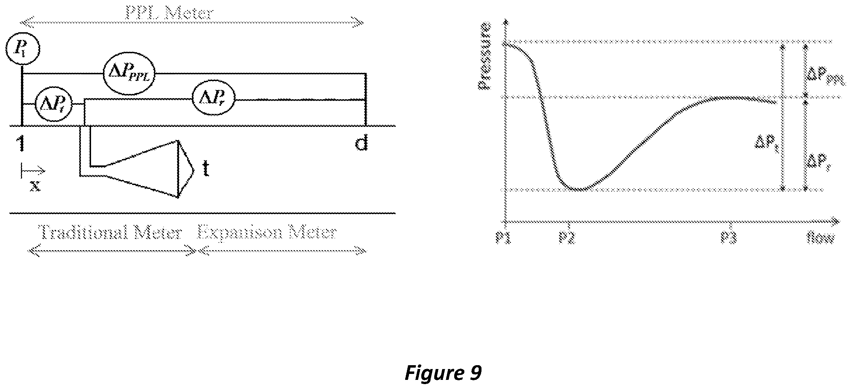

Consider a cone DP meter with three DP readings as shown in Figure 9. As with the Venturi meter in Figure 1 the three DPs can each be used to predict the flow (via equations 2, 3, 4) but as the DPs are related these three flowrate predictions are not independent.

This example's data set is from a 14" (35.56 cm) 0.56 beta cone DP meter calibrated at a natural gas calibration facility. The meter had an inlet diameter of 0.337 m and cone diameter of 0.28 m. Cone meter geometry uncertainty is accounted for in the calibrated flow coefficient data. This standalone cone meter's mass flowrate prediction uncertainty is 0.78% at the flow rate in this example.

Measured input variables, relative uncertainties and absolute uncertainties are listed in Table 3. These measurements comprise the inputs into the vector x in equation 23 and the covariance matrix, $V$, in equation 35. Uncertainties are stated at the 95% confidence level. The covariance matrix $V$ is diagonal with entries given by the squares of the absolute uncertainties listed in Table 3.

V= diag (1045.825, 66.254, 1045.80, 1.60E-09, 1.81E-05, 1.30E-03, 1.18E-05, 8.22E-03) The derived traditional, recovered and PPL mass flow rates calculated according to Equations 2, 3, & 4 are shown in Table 4 along with their arithmetic average. The arithmetic average is the input into vector u of equation 30. Alternative methods to calculate the mass flow rate for input into vector u could be used, such as an uncertainty weighted average mass flow rate, or simply choosing the traditional mass flow rate as it typically has the lowest uncertainty.

Table 3. 14", 0.56 Beta Cone DP Meter Variable and Parameter Uncertainties.

| Measurement | Unit | Value | Percent Uncertainty | Absolute Uncertainty |
|---|---|---|---|---|
| DPt | Pa | 2759.4650 | 1.17% | 32.339 |
| DPr | Pa | 948.1350 | 0.86% | 8.140 |
| $DP_{PPL}$ | Pa | 1774.7270 | 1.82% | 32.339 |
| Y | Dimensionless | 0.9996 | 0.004% | 0.00004 |
| $C_d$ | Dimensionless | 0.8514 | 0.50% | 0.004257 |
| Kr | Dimensionless | 1.440 | 2.50% | 0.036000 |
| $K_{PPL}$ | Dimensionless | 0.344 | 1.00% | 0.003441 |
| P | kg/m$^3$ | 33.579 | 0.27% | 0.091 |

Table 4. 14", 0.56 Beta Cone DP Meter Three Related Flowrate Predictions.

| Mass Flow Rate | Value (kg/s) |
|---|---|
| $m_{trad}$ | 10.6135 |
| mexp | 10.5263 |
| $m_{PPL}$ | 10.5855 |
| Arithmetic Average | 10.5751 |

In the first iteration the Jacobian matrix, $J_x$, derived from the constraints of equations 26 to 29 is the 4x8 matrix with entries according to Table 5. The rows correspond to the constraints applied to cone meter measurements and the columns are the measured variables to be reconciled.

Table 5. 14", 0.56β Cone Meter 1st Iteration Jacobian for Metered Variables and Parameters.

| | DPt | DPr | $DP_{PPL}$ | Y | $C_d$ | Kr | $K_{PPL}$ | P |
|---|---|---|---|---|---|---|---|---|
| DPt | -0.00192 | 0 | 0 | - 10.61752 | - 12.46592 | 0 | 0 | -0.15804 |

(continued)

|  | DPt | DPr | DP$_{PPL}$ | Y | C$_d$ | Kr | K$_{PPL}$ | P |
|---|---|---|---|---|---|---|---|---|
| DPr | 0 | -0.00555 | 0 | 0 | 0 | -7.30991 | 0 | -0.15674 |
| DP$_{PPL}$ | 0 | 0 | -0.00298 | 0 | 0 | 0 | - 30.76289 | -0.15762 |
| Delta P | 1 | -1 | -1 | 0 | 0 | 0 | 0 | 0 |

The Jacobian matrix, $J_u$, derived from equation 34 is the 4x1 matrix with entries according to Table 6. Again, the rows represent the constraints applied to the system and the columns are the unknown variables to be reconciled, in this case the mass flow rate.

Table 6. 14", 0.56 Beta Cone DP Meter Jacobian for unmeasured variables.

|  | m |
|---|---|
| DP$_t$ | 1 |
| DP$_r$ | 1 |
| DP$_{PPL}$ | 1 |
| Delta P | 0 |

Applying equations 30 and 31 results in the following corrections being derived and new values for the measured and unmeasured variables as shown in Table 8. The Initial Value column shows the value of each measured and unmeasured variable before reconciliation. The Reconciled Value at Start of Iteration column shows the value of each variable calculated in the previous iteration of the MLU calculation. In the first iteration this is the Initial Value of each variable. The Correction column shows the correction to each variable calculated by the MLU equations 30 and 31. Table 8 also shows convergence test results. Convergence is checked in both the measured variables and unmeasured variables. In the measured variables convergence is checked by taking the sum of the absolute values of the difference between reconciled variables at the start and end of each iteration, $S_m$. For this example, convergence has been defined to occur when this sum is less than or equal to 1E-06. After the first iteration $S_m$ = 0.0271 therefore the measured variable convergence test is failed. For convergence the absolute difference between reconciled mass flow rate values at the start and end of the iteration is also required to be less than or equal to 1E-06. This test is also not passed after the first iteration. The iteration must therefore continue.

Alternative methods to check for convergence can be employed. Other metrics which could be used (but which the method is not limited to) are the sum of the squares of the absolute difference in reconciled variables being less than a threshold value, or the sum of the squares of the difference in reconciled variables relative to the value at the start of the iteration being less than a threshold value.

Table 7. 1st Iteration of Cone Meter's MLU Convergence Check.

| Measured Variable | Initial Value | Reconciled Value at start of iteration | Correction | Reconciled Value at End of Iteration |
|---|---|---|---|---|
| DP$_t$ | 2759.4650 | 2759.4650 | 20.2132 | 2739.2519 |
| DP$_r$ | 948.1350 | 948.1350 | -1.9507 | 950.0857 |
| DP$_{PPL}$ | 1774.7270 | 1774.7270 | -14.4391 | 1789.1661 |
| Y | 0.9996 | 0.9996 | -5.6E-08 | 0.9996 |
| C$_d$ | 0.8514 | 0.8514 | -0.000747 | 0.8521 |
| Kr | 1.4400 | 1.4400 | -0.006406 | 1.4464 |
| K$_{PPL}$ | 0.3441 | 0.3441 | 0.001451 | 0.3426 |
| P | 33.5792 | 33.5792 | -6.42282E-06 | 33.5792 |

(continued)

| Measured Variable | Initial Value | Reconciled Value at start of iteration | Correction | Reconciled Value at End of Iteration |
|---|---|---|---|---|
| | | Convergence test | 0.0271 | Not converged |
| | | | | |
| Unmeasured Variable | Initial Value | Reconciled Value at start of iteration | Correction | Reconciled Value at end of iteration |
| m | 10.6135 | 10.6135 | 0.0296 | 10.5840 |
| | | Convergence test | 0.0296 | Not converged |

In the second iteration the Jacobian matrix, $J_x$, derived from the constraints of equations 26 to 29 is the 4x8 matrix with entries according to the 'Reconciled Value at End of Iteration' column Table 8. The iteration will continue until convergence is achieved. In this example convergence is achieved on the third iteration. The result of this third iteration is shown as Table 8.

Since the method has converged the mass flow rate uncertainty may now be calculated. It is calculated according to equation 38 which gives the variance of the mass flow rate var($m$) = 6.12E-03. The absolute uncertainty in mass flow rate is therefore $\sigma_m$ = sqrt(var($m$)) = 0.078 kg/s. Thus, the relative uncertainty in reconciled mass flow rate is $\varepsilon_m$ = 0.51%, compared to 0.59% relative uncertainty in the traditional mass flow rate.

Table 8. Third Iteration of Maximum Likelihood Uncertainty' Convergence Check.

| Measured Variable | Initial Value | Reconciled Value at start of iteration | Correction | Reconciled Value at End of Iteration |
|---|---|---|---|---|
| $DP_t$ | 2759.4650 | 2739.3262 | 20.1387 | 2739.3263 |
| $DP_r$ | 948.1350 | 950.0814 | -1.9463 | 950.0813 |
| $DP_{PPL}$ | 1774.7270 | 1789.2448 | -14.5179 | 1789.2449 |
| Y | 0.9996 | 0.9996 | -5.6E-08 | 0.9996 |
| $C_d$ | 0.8514 | 0.8521 | -0.00074 | 0.8521 |
| $K_r$ | 1.4400 | 1.4464 | -0.00640 | 1.4464 |
| $K_{PPL}$ | 0.3441 | 0.3426 | 0.00145 | 0.3426 |
| P | 33.5792 | 33.5792 | 0 | 33.5792 |
| | | Convergence test | 1.68E-07 | Converged |
| | | | | |
| Unmeasured Variable | Initial Value | Reconciled Value at start of iteration | Correction | Reconciled Value at end of iteration |
| m | 10.6135 | 10.5839 | 7.63E-08 | 10.5839 |
| | | Convergence test | 7.21E-09 | Converged |

Furthermore, the gas amount billing has been finely adjusted. The stand-alone 14" cone meter reads 10.613 kg/s at 0.78% relative uncertainty. The combined system MLU technique calculates 10.584 kg/s at 0.64%. That is the system has shown that the standalone cone meter is most probably over-reading the gas flow by i.e. 0.029 kg/s, i.e. 2.51 tonnes of gas per day, or 914.5 tonnes of gas /annum. This is a positive shift of 43.8 MMSCF per year (1240278 std m$^3$) (about $110,000 / per year at $2.5 / million BTU prices) (with 1 million BTU = 293 kW*hr). Without the MLU technique this issue goes unchecked for the life of the meter, often many years. Note that this example shows a negative shift in flowrate prediction. For all MLU techniques always reduce the flowrate prediction uncertainty, the flowrate prediction results for any given application can be positive or negative shifts.

Example 5: Uncalibrated Orifice DP Meter with Pressure Field DP Readings

In this example, we consider an uncalibrated 4" (10.16 cm), 0.5 beta orifice meter with an inlet diameter of 0.102 m and throat diameter of 0.0508 m. The standalone uncertainty of the uncalibrated meter (based on AGA Report 3 [12]) is 0.79%. For this example, as the orifice meter is not normally calibrated the inlet and throat diameters, $D$ and $d$, are also considered measured variables in the MLU technique. They are therefore required to be included in the vector of measurements, $x$, the Jacobian, $J_x$, and the covariance matrix, $V$.

Measured input variables, relative uncertainties and absolute uncertainties are listed in Table 9. These measurements comprise the inputs into the vector $x$ in equation 23 and the covariance matrix, $V$, in equation 35.

Uncertainties are stated at the 95% confidence level. The covariance matrix $V$ is diagonal with entries given by the squares of the absolute uncertainties listed in Table 9.

$V=$ diag(811074.3, 56414.8, 439339.5, 6.5E-10, 6.5E-08, 9E-06, 9.2E-06, 3.04E-4, 3.2E-06, 9.6E-03)

Table 9. 4", 0.5 Beta Orifice DP Meter Variable and Parameter Uncertainties.

| Measurement | Unit | Value | Percent Uncertainty | Absolute Uncertainty |
|---|---|---|---|---|
| $DP_t$ | Pa | 90059.66 | 1.00% | 900.597 |
| $DP_r$ | Pa | 23751.81 | 1.00% | 237.518 |
| $DP_{PPL}$ | Pa | 66282.69 | 1.00% | 662.827 |
| $d$ | m | 0.051 | 0.05% | 0.000 |
| $D$ | m | 0.102 | 0.25% | 0.000 |
| $Y$ | Dimensionless | 0.991 | 0.30% | 0.003 |
| $C_d$ | Dimensionless | 0.605 | 0.50% | 0.003 |
| $K_r$ | Dimensionless | 1.162 | 1.50% | 0.017 |
| $K_{PPL}$ | Dimensionless | 0.178 | 1.00% | 0.002 |
| $\rho$ | kg/m$^3$ | 36.304 | 0.27% | 0.098 |

The derived traditional, recovered and PPL mass flow rates calculated according to equations 2a, 3a, & 4a are shown in Table 10 along with their arithmetic average. The arithmetic average is the input into vector $u$ of equation 30. Again, alternative methods to calculate the mass flow rate for input into vector $u$ could be used.

Table 10. 4", 0.5 Beta Orifice DP Meter Three Related Flowrate Predictions.

| Mass Flow Rate | Value (kg/s) |
|---|---|
| $m_{trad}$ | 3.208 |
| mexp | 3.191 |
| $m_{PPL}$ | 3.213 |
| Arithmetic Average | 3.204 |

In the first iteration the Jacobian matrix, $J_x$, derived from the constraints of equations 26 to 29 is the 4x10 matrix with entries according to Table 11. The rows correspond to the constraints applied to the orifice meter measurements and the columns are the measured variables to be reconciled.

The Jacobian matrix, $J_u$, derived from equation 34 is the 4x1 matrix with entries according to Table 12. Again, the rows represent the constraints applied to the system and the columns are the unknown variables to be reconciled, in this case the mass flow rate.

Table 11. 4", 0.5 β Orifice Meter 1st Iteration Jacobian for Metered Variables and Parameters

|  | $DP_t$ | $DP_r$ | $DP_{PPL}$ | d | D | Y | $C_d$ | $K_r$ | $K_{PPL}$ | ρ |
|---|---|---|---|---|---|---|---|---|---|---|
| $DP_t$ | -1.781 E-05 | 0 | 0 | -134.48 | 4.067 | -3.235 | -5.302 | 0 | 0 | -0.044 |
| $DP_r$ | 0 | -6.72 E-05 | 0 | -133.80 | 4.047 | 0 | 0 | -2.746 | 0 | -0.044 |
| $DP_{PPL}$ | 0 | 0 | -2.42e E-05 | 0 | -62.84 | 0 | 0 | 0 | -18.02 | -0.044 |
| Delta P | 1 | -1 | -1 | 0 | 0 | 0 | 0 | 0 | 0 | 0 |

Table 12. 4", 0.5β Orifice DP Meter Jacobian for unmeasured variables.

|  | m |
|---|---|
| $DP_t$ | 1 |
| $DP_r$ | 1 |
| $DP_{PPL}$ | 1 |
| Delta P | 0 |

Applying equations 30 and 31 results in the following corrections being derived and new values for the measured and unmeasured variables as shown in Table 13. The same layout is used as for the cone meter example in Table 7. The convergence check is also analogous to that used in the calibrated cone meter example.

In the second iteration the Jacobian matrix, $J_x$, derived from the constraints of equations 26 to 29 is the 4x10 matrix with entries according to the 'Reconciled Value at End of Iteration' column Table 13. Iteration will continue until convergence is achieved. In this example convergence is achieved on the fourth iteration. The result of this fourth iteration is shown as Table 14.

Table 13. First Iteration of Orifice Meter's 'Maximum Likelihood Uncertainty' Convergence Check.

| Measured Variable | Initial Value | Reconciled Value at start of iteration | Correction | Reconciled Value at End of Iteration |
|---|---|---|---|---|
| $DP_t$ | 90059.66 | 90059.6644 | 38.5812 | 90021.0832 |
| $DP_r$ | 23751.81 | 23751.8078 | -23.1313 | 23774.9392 |
| $DP_{PPL}$ | 66282.69 | 66282.6880 | 36.5440 | 66246.1440 |
| d | 0.0508 | 0.0508 | -3.62E-07 | 0.0508 |
| D | 0.1023 | 0.1023 | 1.84E-05 | 0.1022 |
| Y | 0.9914 | 0.9914 | 4.66E-05 | 0.9913 |
| $C_d$ | 0.605 | 0.6050 | 7.90E-05 | 0.6049 |
| $K_r$ | 1.162 | 1.162 | -0.004862 | 1.1669 |
| $K_{PPL}$ | 0.178 | 0.178 | 0.000241 | 0.1781 |
| ρ | 36.304 | 36.304 | 1.54E-05 | 36.3039 |
|  |  | Convergence test | 98.26 | Not converged |
|  |  |  |  |  |
| Unmeasure d Variable | Initial Value | Reconciled Value at start of iteration | Correction | Reconciled Value at end of iteration |

(continued)

| Measured Variable | Initial Value | Reconciled Value at start of iteration | Correction | Reconciled Value at End of Iteration |
|---|---|---|---|---|
| m | 3.204 | 3.204 | -0.00251 | 3.2064 |
| | | Convergence test | 0.00251 | Not converged |

Since the MLU method has converged the mass flow rate uncertainty may now be calculated. It is calculated according to equation 38 which gives the variance of the mass flow rate var($m$) = 3.6E-04. The absolute uncertainty in mass flow rate is therefore $\sigma_m$ = sqrt(var($m$)) = 0.019 kg/s. Thus, the relative uncertainty in reconciled mass flow rate is $\varepsilon_m$ = 0.59%, compared to 0.79% relative uncertainty in the traditional mass flow rate.

Table 14. Fourth Iteration of Maximum Likelihood Uncertainty' Convergence Check.

| Measured Variable | Initial Value | Reconciled Value at start of iteration | Correction | Reconciled Value at end of iteration |
|---|---|---|---|---|
| $DP_t$ | 90059.66 | 90021.1884 | 38.4760 | 90021.1884 |
| $DP_r$ | 23751.81 | 23775.0006 | -23.1928 | 23775.0006 |
| $DP_{PPL}$ | 66282.69 | 66246.1878 | 36.5002 | 66246.1878 |
| d | 0.0508 | 0.0508 | -3.64E-07 | 0.0508 |
| D | 0.1023 | 0.1022 | 1.83E-05 | 0.1022 |
| Y | 0.9914 | 0.9913 | 4.63E-05 | 0.9913 |
| $C_d$ | 0.605 | 0.6049 | 7.86E-05 | 0.6049 |
| $K_r$ | 1.162 | 1.1669 | -0.004860 | 1.1669 |
| $K_{PPL}$ | 0.178 | 0.1781 | 0.000241 | 0.1781 |
| $\rho$ | 36.304 | 36.304 | 0 | 36.3039 |
| | | Convergence test | 1.88E-07 | Converged |
| | | | | |
| Unmeasured Variable | Initial Value | Reconciled Value at start of iteration | Correction | Reconciled Value at end of iteration |
| m | 3.204 | 3.2064 | 1.8E-12 | 3.2064 |
| | | Convergence test | 1.8E-12 | Converged |

In this example the fine adjustment to the gas mass flow is very small but the reduction in uncertainty is significant. The stand-alone 4" orifice meter reads 3.208 kg/s at 0.79%. The combined system's MLU technique calculates 3.206 kg/s at $\pm$0.497%. This is a standard flow prediction of 13.30 MMSCFD $\pm$ 0.105 MMSCFD, i.e. at $2.5 / million BTU prices, $33,250K $\pm$ $263/ day becoming 13.29 MMSCFD $\pm$ 0.078 MMSCFD, i.e. $33,225K $\pm$ $196/ day (with 1 MMSCFD = 28316.9 std m3 per day and 1 million BTU = 293 kWh).

This is an annual reduction in financial exposure due to uncertainty of $\pm$$95.9K down to $\pm$$71.6K, i.e a reduction in uncertainty of $23.6K.

Without the MLU technique this issue goes unchecked for the life of the meter, often many years. Note that this example shows a small negative shift in flowrate prediction, but MLU results of any given application can be positive or negative shifts in flowrate prediction. This example is for a small (i.e. 4") meter with a moderate mass flowrate. The financial significance of this technology applied to larger meters with greater flowrate is proportionally greater.

The method is not limited to DP meters with three independent DP measurements, but applies to any meter with two or more measurements.

3.1.3 Different Mathematical Approaches

This disclosure provides for taking the physical assembly of two (or more) flow meters, or one meter with additional instrumentation, and comparing the resulting data set as a whole to physical law/s such that discrepancies arising from instrument reading uncertainty are mitigated. The result is the production of a single set of data more accurately representing the likely physical reality. This includes an optimised 'Maximum Likelihood Uncertainty', i.e. a more precise and trustworthy flowrate prediction. The particular choice of mathematical techniques used to operate the method can vary. The examples given above are just that, examples. There are various mathematical techniques that can be applied to solve such a mathematical problem. Furthermore, some mathematical techniques offer the potential of taking the combined data sets of the multiple instrumentation and the associated physical constraints, and eking out further nuggets of useful information. The following are a selection of optional mathematical techniques. This list is not exhaustive.

Robust MLU

Robust MLU [13] provides a means by which the least-squares MLU approach can be made less sensitive to gross errors. It is also applicable if the assumption that measurement uncertainties follows a normal distribution is known or suspected not to be valid, and instead follows a different distribution.

Robust MLU differs from the standard MLU approach defined above by altering the Covariance matrix according to the probability distributions from which measurement errors are expected to follow. Possible probability distributions could be, but are not limited to: Contaminated Gaussian; Cauchy, Logistic, Lorentzian, Fair Function, or Hempel's Redescending M-Estimator.

Assuming measurement errors to be distributed according to a Contaminated Gaussian means the measurement noise is sampled from two Gaussian distributions, one with small variance, $\sigma_1$, and one with large variance, $\sigma_2$. For each measurement $x_i$, of a true value, $\hat{x}_i$, there are two probability density functions

$$P_{j,i}\left( x_i \mid \hat{x}_i, \sigma_j \right) = \frac{1}{\sqrt{2\pi\sigma_j{}^2}} e^{-\left( \frac{(\hat{x}_i - x_i)^2}{2\sigma_j{}^2} \right)} \tag{39}$$

where subscript '$j$' denotes the specific Gaussian distribution.

The Contaminated Gaussian probability density function is the sum of these two distributions

$$P( x_i \mid \hat{x}_i, \sigma_1, \sigma_2 ) = \eta P_{1,i} + (1 - \eta)P_{2,i} \tag{40}$$

where $0 \leq \eta \leq 1$. With this assumption on measurement noise the MLU approach described above can be applied but now with a covariance matrix where the diagonal terms are given by

$$V_{ii} = \frac{\dfrac{\eta}{\sigma_1^2} P_{1,i} + \dfrac{1 - \eta}{\sigma_2^2} P_{2,i}}{\eta P_{1,i} + (1 - \eta)P_{2,i}} \tag{41}$$

And it is calculated at each iteration using probability densities from equation (39) using the estimate of $\hat{x}_i$ from the latest iteration as the mean of the probability density function.

Extended Kalman Filter

The method described above applies multiple measurements at one point or period in time to derive best estimates of variables. In order to take advantage of the temporal redundancy of data, filtering techniques can be applied. That is, the method can be extended from an essentially static data set to dynamic data analysis. For instance, Reynolds number (a dimensionless expression of flowrate) can vary with time, and a DP meter's discharge coefficient varies with Reynolds number. Similarly, an orifice meter's Pressure-Loss-Ratio (the ratio of permanent pressure loss to primary DP) is a function of discharge coefficient, meter geometry and Reynolds number.

Kalman Filters are typically used to model dynamic systems where a linear relationship defines evolution of the system state with time. For the case of a flow meter this can be modified to considering a non-linear evolution of the flow meter's state with flowrate. The non-linear evolution is due to the non-linear relationship between the mass flowrate and the state variables, (e.g. for DP meters: m $\alpha$ $\sqrt{(\rho\Delta P)}$). Hence, for this non-linear case an 'Extended Kalman Filter' is required. This Extended Kalman Filter would model the flow metering system's non-linear evolution with flowrate (instead of time). By analyzing multiple data grabs at different flow rates an Extended Kalman Filter (EKF) could reduce flow rate uncertainty and/or parameter estimation thereby even calibrating the DP meter in-situ.

The EKF works in a two-step process. In the **predict step,** the Kalman filter produces estimates of the current state variables, along with their uncertainties. This requires a physical model, representing the underlying dynamics of the system, to calculate the current state from the latest estimates. Once the outcome of the next measurement is observed (naturally corrupted with some amount of uncertainty, including random noise), these estimates are updated (in the **update step**) using an uncertainty weighted average, with more weight being given to estimates with lower uncertainty. Such an algorithm is recursive in that it uses only the present input measurements, the previously calculated state and the uncertainties in each of these; no additional past information is required.

This approach is particularly relevant to uncalibrated DP meters, including uncalibrated orifice meters. For example, an initial estimate of the orifice discharge coefficient is predicted according to the ISO5167-2 [14] Reader-Harris Gallagher equation. An initial estimate of the pressure-loss ratio (PLR) can be predicted by the Urner equation in ISO 5167-2 [14], or a commercial equivalent equation. The Kalman Filter successively tunes these parameters.

Consequently, by applying an EKF actual measurements from the DP meter under study will improve estimates of variables affecting the mass flow rate calculations (in equations 2 to 4) and associated uncertainty. In effect this technique provides a mechanism for a self-calibrating meter.

The flow meter Kalman filter comprises the flow meter data reconciliation (MLU) method extended into the time domain. Time provides an extra dimension in which repeated measurements by the same instruments generate additional information that can be exploited by the MLU techniques to improve the estimates of flow rate and further reduce its uncertainty. It exploits temporal dependencies using a model that describes how the flow meter system parameters and variables propagate from one time step to the next. It uses the same weighted least square uncertainties, as flow meter data reconciliation MLU, to update the values of the parameters and variables in the system.

The flow meter Extended Kalman Filter uses a process model to predict how the dynamic flow metering system's variables and parameters propagate from one time step to the next, and reconciles these with a series of measurements with statistical noise (i.e. uncertainty) observed over time. It does this in a statistically optimal fashion and produces estimates of the variables and parameters that tend to be more precise than those based on measurements alone.

A DP meter that monitors the meter's axial pressure profile has three flow equations using three flow coefficients. For ostensibly constant flow conditions, with associated constant Reynolds number, these flow coefficients are ostensibly constant in time. Any small fluctuation in flow conditions produces corresponding small fluctuations in Reynolds number are flow coefficients. This extra information can be incorporated into the MLU technique using the Kalman Filter.

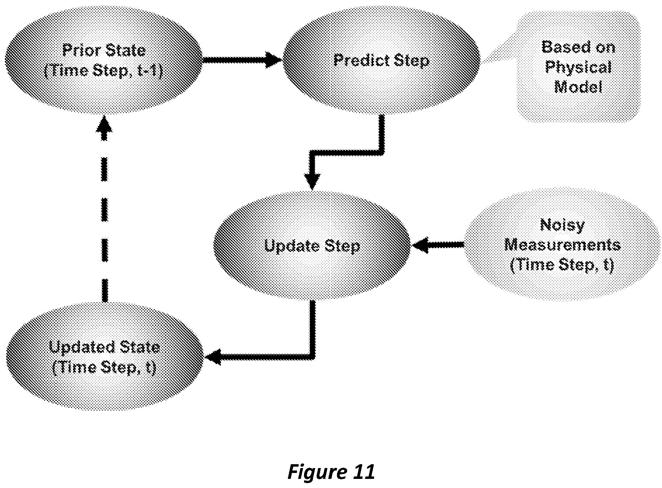

The flow meter Kalman filter algorithm works in a two-step process as indicated schematically in Figure 11.

In the prediction step, the Kalman filter produces estimates of the current state variables, along with their uncertainties. Once the outcome of the next measurement (necessarily with some uncertainty including random noise) is observed, these estimates are updated (in the update step) using a weighted average, with more weight being given to estimates with lower certainty. The algorithm is recursive in that it uses only the present input measurements and the previously calculated state and its uncertainty matrix; no additional past information is required.

**State Variables**

Six state variables of a DP measurement system can be defined as:

- Primary or 'traditional' DP ($\Delta P_t$)
- recovered DP ($\Delta P_r$)
- permanent pressure loss DP ($\Delta P_{PPL}$)
- modified discharge coefficient ($C_d'$)
- modified expansion coefficient ($K_r'$)
- modified permanent pressure-loss coefficient ($K_{ppl}'$)

The 'modified' coefficients (indicated by the " ' " superscript) are derived from the discharge, expansion, and permanent pressure loss coefficients $C_d$, $K_r$ and $K_{PPL}$ respectively.

The 'primary' (or 'traditional'), 'recovered' and 'permanent pressure loss' mass flow rates $m_t$, $m_r$, and $m_{PPl}$ are given by:

$$m_t = EA_t Y C_d \sqrt{2\rho\Delta P_t} = C_d' \sqrt{2\rho\Delta P_t}$$

$$m_r = EA_t K_r \sqrt{2\rho\Delta P_r} = K_r' \sqrt{2\rho\Delta P_r}$$

$$m_{PPL} = AK_{PPL} \sqrt{2\rho\Delta P_{PPL}} = K_{PPL}' \sqrt{2\rho\Delta P_{PPL}}$$

Here, modified coefficients are defined as:

$$C_d' = EA_t Y C_d$$

$$K_r' = EA_t K_r$$

$$K_{PPL}' = AK_{PPL}$$

Real world cases are relatively complicated with an ostensibly constant flow, expansion factor, flow coefficients, density, and DPs all varying around an approximately constant mean. However, by way of producing a short and relatively simple DP flow meter Kalman filter example here, let us consider the simplified case of conditions where the ostensibly constant flow and the associated expansion factor and flow coefficients can be effectively considered constant, as can the density value, but the DP signals have natural variations around the mean.

**Prediction Step**

The first equation in the predict phase of the DP meter Kalman filter employs the transition matrix, which predicts how the state variables from the previous time step (t-1) propagate to the current time step (t). For this simple example the model assumes that the modified flow coefficients are constant throughout time, i.e.:

$$C_{d,t}' = C_{d,t-1}' = C_d' \qquad (3)$$

$$K_{r,t}' = K_{r,t-1}' = K_r' \qquad (4)$$

$$K_{PPL,t}' = K_{PPL,t-1}' = K_{PPL}' \qquad (5)$$

The filter is provided with initial estimates of the values of these parameters and their uncertainty. However, their true value is unknown, only that the true value remains constant in time. The Kalman filter uses this information and the DP measurements to update its estimate of these parameters and improve the uncertainties of those estimates.
The three differential pressures can vary unpredictably as dictated by the fluctuations in the process from one time step to the next.
The uncertainty, or more strictly the covariance, in the previous time step's state variables i.e. an output from the Update Step of the Kalman filter run at the previous time step (t-1), is used and propagated forward in time adding process noise. The process noise represents the uncertainty in the physical model.
In this simple model the flow coefficient process noise is considered zero (since they are said to remain constant) but the differential pressures are considered variables and the unpredictable DP fluctuations each produces noticeable loggable process noise. Though the assignment of this process noise may appear somewhat arbitrary at this point, it is an adjustable parameter and its correct value can be ensured by monitoring the innovation and auto-correlation statistics output by the Kalman filter.

**Update Step**

This step updates the state variables using the data from available measurements. It also imposes the mass and pressure balance constraints associated with the system.
The available measurements are the three differential pressure measurements. The DP measurements are necessarily uncertain and hence the Kalman filter's estimates of the values of the constant but unknown flow coefficients are updated using a weighted average of all estimates and measurements, with more weight being given to those with lower uncertainty. The constraints are also imposed, and to ensure they are complied with the coefficients and measured differential pressures, are adjusted accordingly.

The DP flow meter Kalman filter mass balance constraint equations are:

$$C'_{d,t}(2\rho\Delta P_t)^{1/2} - K'_{r,t}(2\rho\Delta P_r)^{1/2} = 0$$

$$C'_{d,t}(2\rho\Delta P_t)^{1/2} - K'_{l,t}(2\rho\Delta P_l)^{1/2} = 0$$

$$K'_{l,t}(2\rho\Delta P_l)^{1/2} - K'_{r,t}(2\rho\Delta P_r)^{1/2} = 0$$

The pressure balance is:

$$\Delta P_t - \Delta P_r - \Delta P_{PPL} = 0$$

Because the uncertainty of the measurements and the process model uncertainty (process noise) may be difficult to determine precisely, the filter's behaviour can be considered in terms of gain. The Kalman gain is a function of the relative uncertainty of the measurements and current estimates of the flow coefficients. These can be tuned to achieve a particular performance. With high gain, the filter places more confidence on the measurements, and thus follows them more closely. With low gain, the filter follows the model predictions more closely, smoothing out noise but decreasing the responsiveness. The gain is adjusted using the process noise described in the Predict Step.

The uncertainties of the state variables, i.e. the updated coefficients and DPs, are also filter outputs. These are in the form of a covariance matrix. This covariance matrix, along with the uncertainty in the fluid density, is used in the determination of the uncertainty in the calculated mass flow rate at each time step.

**Recursion**

The DP flow meter filter's calculated state variables and their associated uncertainties at the current time step, t, form the inputs to the calculations of the next time step, t + 1. This is the filter's recursive nature. All information required to perform the calculations in the next time step is contained within the estimates and uncertainties from the current time step.

This feature makes the DP flow meter Kalman filter computationally very efficient, which is helpful from a practical software implementation viewpoint because the algorithm is concise and only requires input from the previous time step.

The 'Extended' Kalman filter technique being employed here is necessary to handle the non-linear constraint, and its discrete nature is due to it being applied at discrete time intervals rather than continuously (though the time intervals are short in duration).

Extended Kalman Filter Example

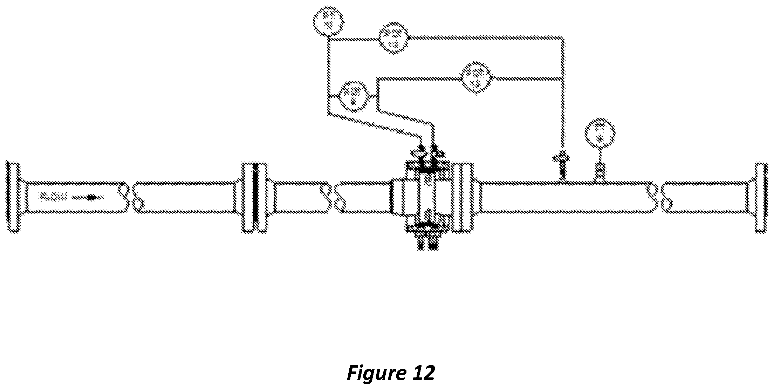

An orifice meter with a flow prediction uncertainty of 0.75% was installed in a natural gas test facility with a reference gas meter with a 0.5% uncertainty (see Figure 12 for a schematic diagram). The meter parameters and fluid properties were known, and the three differential pressures measured and recorded at 3 second intervals. As with all real world flows called 'steady' the flow was in reality pseudo-steady, i.e. there were small natural fluctuations of the mass flow and DP values over time around average values.

The 6" (15.24 cm), 0.6077 beta orifice meter had an inlet diameter of 0.1463 m and throat diameter of 0.0889 m. Measured input variables, relative uncertainties and absolute uncertainties are listed in Table I.

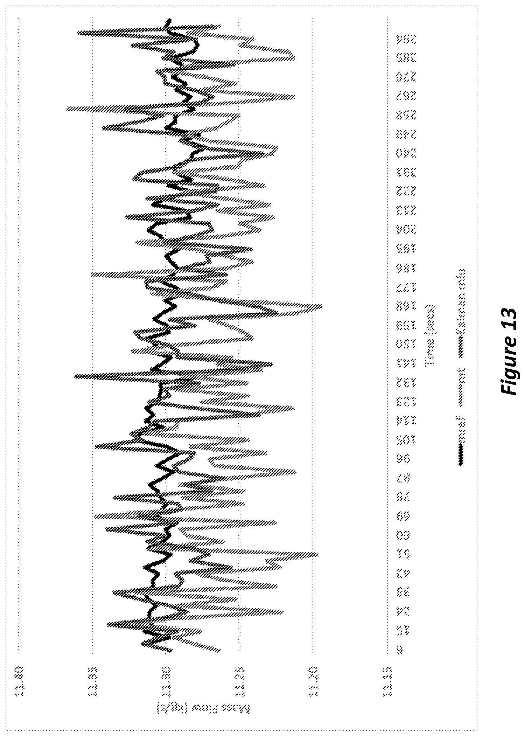

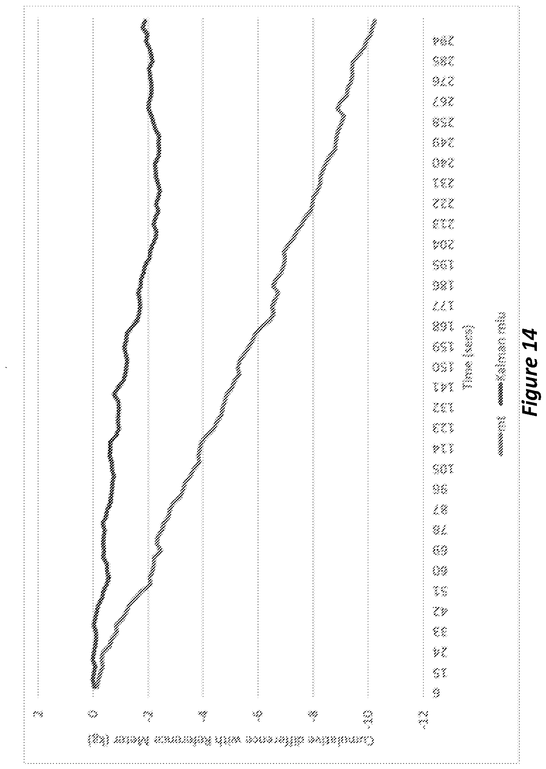

In Figure 13, the mass flow rates calculated using the standard ('traditional' or 'primary') orifice meter equation without the Kalman MLU approach and those calculated using the Kalman MLU approach are compared against the Reference meter values. The Reference meter flow indicated by the mref line, varies, but is more stable than either the standard ('Traditional', mt) orifice meter or Kalman MLU values. The Kalman MLU values are on average closer to the reference meter and exhibit less variability than the standard ('Traditional') orifice meter flow prediction. This is illustrated more clearly in Figure 14 in which the cumulative mass (mass flow integrated over time) difference with the Reference meter flow is plotted.

**Table I - 6", 0.6 Beta Orifice DP Meter Variable and Parameter Uncertainties**

| Variable / Parameter | Unit | Measured Value | Percent Uncertainty | Absolute Uncertainty |
|---|---|---|---|---|
| Mass Flow* | kg/s | 11.299 | | |
| $DP_t$* | Pa | 100,546 | 1.0% | 1,005 |
| $DP_r$* | Pa | 37,359 | 1.0% | 374 |
| $DP_{PPL}$* | Pa | 63,109 | 1.0% | 631 |
| d | m | 0.0889 | 0.05% | 0.000045 |
| D | m | 0.146 | 0.25% | 0.00036 |
| Y | Dimensionless | 0.994 | 0.30% | 0.0030 |
| $C_d$ | Dimensionless | 0.599 | 0.5% | 0.003 |
| $K_r$ | Dimensionless | 0.982 | 1.8% | 0.018 |
| $K_{PPL}$ | Dimensionless | 0.300 | 1.2% | 0.003 |
| $\rho$ | kg/m$^3$ | 39.807 | 0.27% | 0.108 |
| * These are typical average values. | | | | |

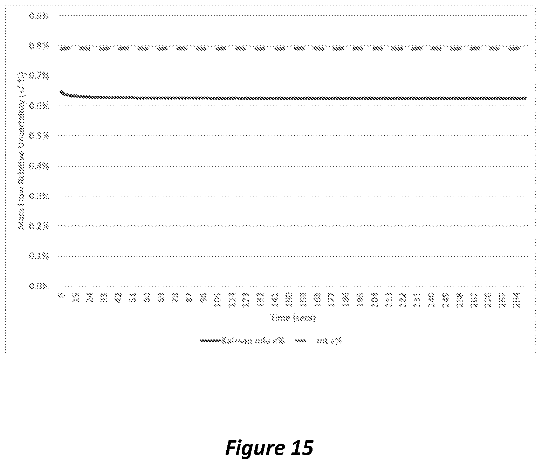

The 'Traditional' orifice meter mass flow rate uncertainty (mt ε% dashed orange line) is compared against the orifice meter Kalman MLU uncertainty (Kalman MLU ε% continuous purple line), in Figure 15.

This illustrates that the Kalman MLU uncertainty reduces with time as it accumulates more data and improves its estimate of the mass flow rate. In contrast the traditional orifice meter flow uncertainty is relatively static as the Reference flow rate remains approximately constant.

The primary (standard) orifice meter flow prediction equation is:

$$\dot{m}_t = EA_tYC_d(2\rho\Delta P_t)^{1/2}$$

For simplicity in this example this can be re-written as:

$$\dot{m}_t = C_d{}'(2\rho\Delta P_t)^{1/2}$$

where

$$C_d' = EA_tYC_d$$

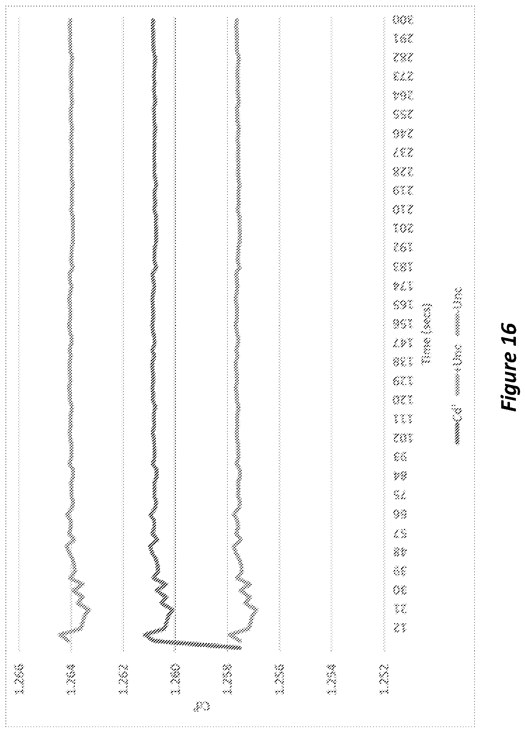

The parameter $C_d$' can be considered a modified discharge coefficient parameter (where the constant geometry terms and variable expansion factor are added). Figure 16 shows the evolution of this modified discharge coefficient with time. This plot illustrates how the Kalman filter adjusts this parameter to a stable and consistent value.

Other Filtering Methods

The Extended Kalman Filter is not the only suitable filtering approach. Amongst other filtering techniques which could be applied are the Unscented Kalman Filter and the $H_\infty$ filter. Where systems are subject to large non-linearities the linearization approximation of the EKF may be unsuitable and more accurate predictions of a system's state and associated uncertainty can be determined from the Unscented Kalman Filter.

$H_\infty$ (H-infinity) mathematical procedures are generally employed in control systems. To use a $H_\infty$ mathematical procedure with two (or more) flow meters, or one meter with additional instrumentation, the system expresses the metering problem as a mathematical optimization problem. $H_\infty$ mathematical techniques were developed to deal with multivariable systems and cross-referencing of different sub-systems and the inventors have realized that they are useful in this application. The $H_\infty$ technique is also applicable when assumptions around process and measurement noise necessary for the EKF (such as known distributions and zero means) are not applicable. The $H_\infty$ method is a robust version of the Kalman Filter. The known disadvantage of $H_\infty$ methods is their dependence on a strong physical model. However, in this application the physical model (i.e. the flow meter's physical operation) is indeed well understood and the physical model is analogous with the physical law constraints we are putting on the combined data. Hence, $H_\infty$ mathematics is another potential mathematical tool to analyze the inventions resulting combined data with physical constraints.

Bayesian Updating

The Robust MLU based approach described above requires the uncertainties in the input independent variables. In the examples thus far these uncertainties have been based on manufacturer's data or calculated in accordance with the relevant standards, e.g. ISO 5167-2 [14] for orifice meters, ISO 17089-1 [15] for ultrasonic meters, ASME MFC-6-2013 [16] for vortex meters etc.. The GUM [8] defines these uncertainties as Type B.

Flow meter manufacturer's 'catch all' uncertainty statements are generic statements to cover multiple applications. In specific applications it is possible that a flow meter's uncertainty will be more or less than the manufacturer's generic statement. Properly installed, and used within the calibrated flow conditions ranges, a flow meter may have lower uncertainty than quoted by the manufacturer. However, if used in adverse flow conditions, or outside the calibrated flow range, a flow meter's uncertainty may be higher than quoted by the manufacturer. In such a scenario there is no reliable manufacturer or standards baseline flow meter uncertainty available. However, in this scenario it is possible to apply this disclosed method, i.e. to cross-reference multiple instrument readings with physical laws, and predict the actual uncertainties.

Bayesian updating provides a posterior probability distribution of the values of the various parameters and independent and dependent variables. It also provides the probability distribution of the range of uncertainties of those same parameters and variables. According to Bayes theorem, the posterior probability of the value of a variable is proportional to the product of the prior probability of that value and the likelihood of the data observed given that value of the variable.

In terms of the simple example of two meters in series described in Section 3.1.1 the posterior probability of any value of the true flow is given by:

$$P(\dot{m}_t \mid \dot{m}_2, \sigma_2, \dot{m}_1, \sigma_1) \propto P(\dot{m}_2, \dot{m}_1, \mid \dot{m}_t, \sigma_2, \sigma_1)P(\dot{m}_t) \qquad (42)$$

where $P(\dot{m}_2, \dot{m}_1, \mid \dot{m}_t, \sigma_2, \sigma_1)$ is the likelihood of observing the data, i.e. the two meter readings $(\dot{m}_1)$ and $(\dot{m}_2)$ given the standard deviations (or equivalently uncertainties) in the two meters and a value of the true flow $(\dot{m}_t)$. This is given by the right-hand side of equation 42. This likelihood is multiplied by the prior probability of $(\dot{m}_t)$, which is equally probable for any finite positive value of the true flow and is therefore a constant and subsumed into the constant of proportionality. For the prior probability to have a non-zero value it has to satisfy the constraints of the system. This is relevant where there are multiple flows or pressures being reconciled.

The posterior probability (left-hand side of equation 42) can be differentiated with respect to $(\dot{m}_t)$ to obtain the most probable value of the true flow given the meter readings and their quoted uncertainties. The second derivative provides the standard deviation (or uncertainty) in the most probable value of the true flow.

However, the Bayesian formulation allows the problem to be expressed more generally and to allow the probability distributions associated with the uncertainties in the input variables to be included:

$$P(\dot{m}_t, \sigma_2, \sigma_1 \mid \dot{m}_2, \dot{m}_1) \propto P(\dot{m}_2, \dot{m}_1, \mid \dot{m}_t, \sigma_2, \sigma_1)P(\dot{m}_t, \sigma_2, \sigma_1) \qquad (43)$$

The prior probability distributions of the standard deviations can be based on a 'Jeffrey's (uninformed) prior' updated using the quoted manufacturer's uncertainties. The resultant joint probability distribution can be marginalized to obtain the standard deviation (or uncertainty) in $(\dot{m}_t)$ by integrating out the contribution of the two, meter standard deviations. Similarly, updated uncertainties in the individual meter's readings can be obtained by marginalizing the true flow and the other meter's standard deviation.

For more complex problems, for example involving the DP meter inter-related multiple DP readings, the standard deviation of the input parameters can be included and updated based on the data using this Bayesian formulation. The generation of the joint posterior distribution and the marginalization of variables may require numerical approaches such as 'Markov Chain Monte Carlo' methods. By using the data in this way and updating the uncertainties of the variables, Type A uncertainties as described in the GUM are being inferred.

Mathematical Technique Summary

The present disclosure of taking the physical assembly of two (or more) flow meters, or one meter with additional instrumentation, and comparing the resulting data set as a whole to the inherent constraints of physical law/s, allows for various different mathematical techniques to be employed as tools to extract the information. Indeed, different mathematical techniques can eke out different pieces of information buried within these data sets with physical constraints. Such a system could use more than one mathematical technique concurrently to analyze the resulting data and its physical constraints. There is no constraint on the mathematical procedure/s chosen and the list above is not exhaustive. The examples above show that such data with physical constraints does contain information where the flowrate prediction uncertainty can be reduced, and the mass flowrate prediction finely adjusted. But other advantages and information is also attainable from the general disclosed method, such as the potential for self-calibration of meters in-situ, deriving flowrate prediction uncertainties when the meter is used outside its stated flow condition range, gross error detection etc.

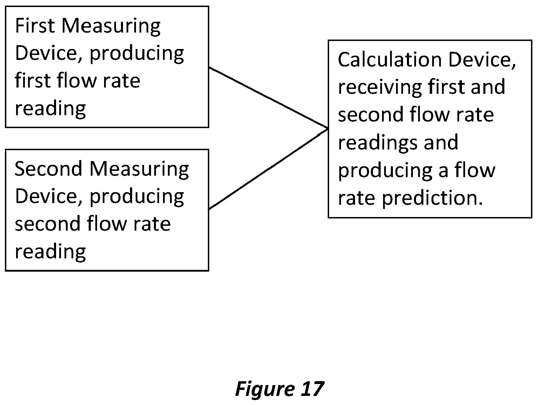

The disclosure can be further understood with reference to figure 17, showing a flow metering system which has a first measuring device producing a first flow rate reading, and a second measuring device producing a second flow rate reading. The readings are provided to a calculation device, which then operates as described here to produce a flow rate prediction, also called a reconciled flow, and its associated uncertainty.

When specifying meter performance characteristics for the market, meter manufacturers tend to state a fixed value as a constant worst case scenario. However, in actual operation the uncertainty of a fluid flow meter will be a is a variable of flowrate. The uncertainty can be calculated dynamically by the measuring devices and/or the calculating device.

Summary

This in essence is the idea of utilizing macro scale pipework process 'MLU' techniques to the micro scale of individual flow metering systems. Existing macro pipe network systems use MLU techniques to gauge the overall state of the entire process. Here the flow meters in the network are not subject to any internal MLU techniques, and simply supply flowrate predictions as a data point. That data point input is assumed as correct and as accurate and reliable as is possible. However, in this invention data analysis techniques are applied within individual metering systems with multiple data readings such that this metering systems flow rate prediction is improved.

It will be appreciated that improvements and modifications can be made to the above without departing from the scope of the disclosure.

References

[1] International Standard Organisation Measurement of Fluid Flow by Means of Pressure Differential Devices, Inserted in circular cross-sections running full, no. 5167 2003.

[2] Steven R., Diagnostic Methodologies for Generic Differential Pressure Flow Meters, North Sea Flow Measurement Workshop 2008, St. Andrews, Scotland, UK.

[3] Steven, R. US Patent 2010/0191481 A1, Flow Metering.

[4] Steven, R., International Patent Application WO 2014/181076.

[5] De Leeuw, R., Liquid Correction of Venturi Meter Readings in Wet Gas Flow, North Sea Flow Measurement Workshop 1997, Norway.

[6] Steven, R., US Patent 2010/0224009 A1, Hybrid Flowmeter that Includes an Integral Vortex Flowmeter and a Differential Flow Meter.

[7] Boden, US Patent 2772567A, Granted 1956.

[8] Guide to the Expression of Uncertainty in Measurement, International Organisation for Standardisation, ISO/IEC Guide 98:1995

[9] Britt, H. I., Luecke, R. H., The Estimation of Parameters in Nonlinear, Implicit Models Technometrics Vol 15 No 2 (May 1973) 233 - 247.

[10] Crowe, Cameron. Reconciliation of Process Flow Rates by Matrix Projection Part II : The Nonlinear Case. AIChE Journal. 32. (April 1986).616 - 623..

[11] Steven R., Britton, C., Kinney, J., Differential Pressure Meters - A Cabinet of Curiosities (and Some Alternative Views on Accepted DP Meter Axioms), North Sea Flow Measurement Workshop 2012, St. Andrews, Scotland, UK.

[12] AGA Report 3, Orifice Metering of Natural Gas and Other Related Hydrocarbon Fluids, 4th Edition, 2000

[13] Huber, P. J. (1981), Robust Statistics. Wiley, New York.

[14] ISO 5167-2 Measurement of Fluid Flow by Means of Pressure Differential Devices, Inserted in circular cross-sections running full - part 2, 2003.

[15] ISO-17089-1:2019 Measurement of fluid flow in closed circuits - Ultrasonic meters for gas - Part 1: Meters for custody transfer and allocation measurement.

[16] ASME MFC-6-2013 Measurement of Fluid Flow in Pipes Using Vortex Flowmeters

[17] Steven, R., Kinney, J., Babajide, A., Lewis, K., Expanded Knowledge on Orifice Meter Response to Wet Gas Flows, North Sea Flow Measurement Workshop 2014, St Andrews, Scotland, UK.

**Claims**

1. A method of metering a fluid flow comprising:

   using a first flow meter to produce a first flow rate reading of the flow to be metered, with an associated first uncertainty;
   using a second flow meter to produce a second flow rate reading of said flow to be metered, with an associated second uncertainty;
   and **characterised by**
   calculating a flow rate prediction based on the combination of the first flow rate reading, the second flow rate reading, the first uncertainty, the second uncertainty, and applying criteria based on physical laws;
   wherein the flow rate prediction has an associated uncertainty which is less than each of the first uncertainty and the second uncertainty.

2. The method of claim 1, where in the first and second flow meters are in series.

3. The method of claim 2, wherein the or each of the first and second flow meters comprise a set of subsidiary flow meters connected in parallel.

4. The method of claim 1, wherein the first and second flow meters operate on the same physical principles.

5. The method of claim 1, wherein the first and second flow meters operate on different physical principles.

6. The method of claim 1, wherein the first and second flow meters are sub-systems in a single hybrid flow meter body.

7. The method of claim 4, wherein the metering sub-systems are independent ultrasonic transducer sets in one ultrasonic meter body, producing two or more independent flow rate readings.

8. The method of claim 5, wherein the sub-systems comprise:

   (a) a vortex meter and a cone meter set together in a hybrid meter body, producing two or more independent flow rate readings; or
   (b) a primary flow meter system with a secondary independent DP meter formed by reading one or more differential pressures across two points in the primary flow meter system; or
   (c) an independent Coriolis meter and an independent DP meter formed from reading a differential pressure between two points across the Coriolis meter body, producing two independent flow rate readings.

9. The method of claim 1, wherein a flow metering system comprises a primary fluid obstruction element and three pressure taps provided at positions respectively upstream, midstream and downstream in relation to the primary fluid obstruction element; and wherein the first and second flow meters are each provided by measuring any pair of:

   (i) a permanent pressure loss (PPL) differential pressure taken between the upstream and downstrem pressure taps;
   (ii) a traditional differential pressure taken between the upstream and midstream pressure taps; and
   (iii) a recovered differential pressure taken between the midstream and the downstream pressure taps;

   to produce the first and second flow rate readings.

10. The method of claim 1, wherein the first and second flow meters are calibrated before use.

**11.** The method of claim 1, wherein the flow is a wet gas flow.

**12.** The method of claim 1, wherein calculating a flow rate prediction comprises applying an Extended Kalman Filter in order to reduce system parameters, estimations and their associated uncertainties, thereby calibrating the flow metering system in-situ.

**13.** The method of claim 1, wherein calculating a flow rate prediction comprises applying one of: Robust Maximum Likelihood Uncertainty; Extended Kalman Filter; Unscented Kalman Filter; H-infinity filter; and Bayesian updating.

**14.** A fluid flow metering system comprising:

a first flow meter configured to produce a first flow rate reading of a flow to be metered, which has an associated first uncertainty;
a second flow meter configured to produce a second flow rate reading of said flow to be metered which has an associated second uncertainty; and **characterised by**
a calculation device configured to calculating a flow rate prediction based on the combination of the first flow rate reading, the second flow rate reading, the first uncertainty, the second uncertainty, and by applying criteria based on physical laws;
wherein the flow rate prediction has an associated uncertainty which is less than each of the first uncertainty and the second uncertainty.

**15.** A computer program product comprising instructions that, when executed on a device being one of a computer, a dedicated flow computer, or circuitry, configure the device to:

receive a first flow rate reading of a flow to be metered from a first flow meter, with an associated first uncertainty;
receive a second flow rate reading from a second flow meter of said flow to be metered, with an associated second uncertainty; and **characterised in that** the device is configured to:

calculate a flow rate prediction based on the combination of the first flow rate reading, the second flow rate reading, the first uncertainty, the second uncertainty, and applying criteria based on physical laws;
wherein the flow rate prediction has an associated uncertainty which is less than each of the first uncertainty and the second uncertainty.

**Patentansprüche**

**1.** Verfahren zum Messen einer Fluidströmung, umfassend:

Verwenden eines ersten Strömungsmessers zum Erzeugen eines ersten Strömungsratenmesswerts der zu messenden Strömung mit einer zugehörigen ersten Unsicherheit;
Verwenden eines zweiten Strömungsmessers zum Erzeugen eines zweiten Strömungsratenmesswerts der zu messenden Strömung mit einer zugehörigen zweiten Unsicherheit;
und **gekennzeichnet durch**:

Berechnen einer Strömungsratenvorhersage basierend auf der Kombination aus dem ersten Strömungsratenmesswert, dem zweiten Strömungsratenmesswert, der ersten Unsicherheit, der zweiten Unsicherheit und Anwenden von Kriterien, die auf physikalischen Gesetzen basieren;
wobei die Strömungsratenvorhersage eine zugehörige Unsicherheit aufweist, die geringer als jede der ersten Unsicherheit und der zweiten Unsicherheit ist.

**2.** Verfahren nach Anspruch 1, wobei der erste und der zweite Strömungsmesser in Reihe geschaltet sind.

**3.** Verfahren nach Anspruch 2, wobei der oder jeder des ersten und des zweiten Strömungsmessers einen Satz parallel verbundener, untergeordneter Strömungsmesser umfasst.

**4.** Verfahren nach Anspruch 1, wobei der erste und der zweite Strömungsmesser nach den gleichen physikalischen Prinzipien arbeiten.

**5.** Verfahren nach Anspruch 1, wobei der erste und der zweite Strömungsmesser nach unterschiedlichen physikalischen Prinzipien arbeiten.

**6.** Verfahren nach Anspruch 1, wobei der erste und der zweite Strömungsmesser Untersysteme in einem einzigen Hybrid-Strömungsmessergehäuse sind.

**7.** Verfahren nach Anspruch 4, wobei die Messuntersysteme unabhängige Ultraschallwandlersätze in einem Ultraschallmessergehäuse sind, die zwei oder mehr unabhängige Strömungsratenmesswerte erzeugen.

**8.** Verfahren nach Anspruch 5, wobei die Untersysteme Folgendes umfassen:

(a) einen Wirbelmesser und ein Konusmesser, die gemeinsam in einem Hybridzählergehäuse eingesetzt sind, die zwei oder mehr unabhängige Strömungsratenmesswerte erzeugen; oder

(b) ein primäres Strömungsmessersystem mit einem sekundären, unabhängigen Differenzdruckmesser, der durch Ablesen eines oder mehrerer Differenzdrücke über zwei Punkte in dem primären Strömungsmessersystem gebildet wird; oder

(c) einen unabhängigen Coriolis-Messer und einen unabhängigen Differenzdruckmesser, der durch Ablesen eines Differenzdrucks zwischen zwei Punkten über dem Gehäuse des Coriolis-Messers gebildet wird, die zwei unabhängige Strömungsratenmesswerte erzeugen.

**9.** Verfahren nach Anspruch 1, wobei ein Strömungsmesssystem ein primäres Fluidsperrelement und drei Druckentnahmestellen umfasst, die an Positionen stromaufwärts, strommittig beziehungsweise stromabwärts in Bezug auf das primäre Fluidsperrelement bereitgestellt sind; und wobei der erste und der zweite Strömungsmesser jeweils durch Messen eines beliebigen Paars von Folgenden bereitgestellt sind:

(i) einem Differenzdruck des permanenten Druckverlusts (PPL), der zwischen den Druckentnahmestellen stromaufwärts und stromabwärts erfasst wird;

(ii) einem herkömmlichen Differenzdruck, der zwischen den Druckentnahmestellen stromaufwärts und strommittig erfasst wird; und

(iii) einem wiederhergestellten Differenzdruck, der zwischen den Druckentnahmestellen strommittig und stromabwärts erfasst wird;

um den ersten und zweiten Strömungsratenmesswert zu erzeugen.

**10.** Verfahren nach Anspruch 1, wobei der erste und der zweite Strömungsmesser vor der Verwendung kalibriert werden.

**11.** Verfahren nach Anspruch 1, wobei die Strömung eine Nassgasströmung ist.

**12.** Verfahren nach Anspruch 1, wobei das Berechnen einer Strömungsratenvorhersage Anwenden eines erweiterten Kalman-Filters umfasst, um Systemparameter, Schätzungen und ihre zugehörigen Unsicherheiten zu reduzieren, wodurch das Strömungsmesssystem in situ kalibriert wird.

**13.** Verfahren nach Anspruch 1, wobei das Berechnen einer Strömungsratenvorhersage Anwenden eines von Folgenden umfasst: robuste Maximum-Likelihood-Unsicherheit; erweiterter Kalman-Filter; Unscented Kalman-Filter; H-Infinity-Filter; und Bayessche Aktualisierung.

**14.** Fluidströmungsmesssystem, umfassend:

einen ersten Strömungsmesser, der zum Erzeugen eines ersten Strömungsratenmesswerts einer zu messenden Strömung, der eine zugehörige erste Unsicherheit aufweist, konfiguriert ist;
einen zweiten Strömungsmesser, der zum Erzeugen eines zweiten Strömungsratenmesswerts der zu messenden Strömung, der eine zugehörige zweite Unsicherheit aufweist, konfiguriert ist; und **gekennzeichnet durch** eine Berechnungsvorrichtung, die zum Berechnen einer Strömungsratenvorhersage basierend auf der Kombination aus dem ersten Strömungsratenmesswert, dem zweiten Strömungsratenmesswert, der ersten Unsicherheit, der zweiten Unsicherheit und durch Anwenden von Kriterien, die auf physikalischen Gesetzen basieren, konfiguriert ist;
wobei die Strömungsratenvorhersage eine zugehörige Unsicherheit aufweist, die geringer als jede der ersten Unsicherheit und der zweiten Unsicherheit ist.

**15.** Computerprogrammprodukt, Anweisungen umfassend, die bei Ausführung auf einer Vorrichtung, die eines von einem Computer, einem dedizierten Strömungscomputer oder einer Schaltung ist, die Vorrichtung zu Folgendem konfigurieren:

Empfangen eines ersten Strömungsratenmesswerts einer zu messenden Strömung von einem ersten Strömungsmesser mit einer zugehörigen ersten Unsicherheit;

Empfangen eines zweiten Strömungsratenmesswerts von einem zweiten Strömungsmesser der zu messenden Strömung mit einer zugehörigen zweiten Unsicherheit; und **dadurch gekennzeichnet, dass** die Vorrichtung zu Folgendem konfiguriert ist:

Berechnen einer Strömungsratenvorhersage basierend auf der Kombination aus dem ersten Strömungsratenmesswert, dem zweiten Strömungsratenmesswert, der ersten Unsicherheit, der zweiten Unsicherheit und Anwenden von Kriterien, die auf physikalischen Gesetzen basieren;

wobei die Strömungsratenvorhersage eine zugehörige Unsicherheit aufweist, die geringer als jede der ersten Unsicherheit und der zweiten Unsicherheit ist.

**Revendications**

**1.** Procédé de mesure d'un débit de fluide comprenant :

l'utilisation d'un premier débitmètre pour produire une première lecture de débit du débit à mesurer, avec une première incertitude associée ;

l'utilisation d'un second débitmètre pour produire une seconde lecture de débit dudit débit à mesurer, avec une seconde incertitude associée ;

et **caractérisé par**

le calcul d'une prédiction de débit sur la base de la combinaison de la première lecture de débit, de la seconde lecture de débit, de la première incertitude, de la seconde incertitude, et l'application de critères basés sur des lois physiques ;

dans lequel la prédiction de débit comporte une incertitude associée qui est inférieure à chacune de la première incertitude et la seconde incertitude.

**2.** Procédé selon la revendication 1, dans lequel les premier et second débitmètres sont en série.

**3.** Procédé selon la revendication 2, dans lequel le ou chacun des premier et second débitmètres comprennent un ensemble de débitmètres auxiliaires connectés en parallèle.

**4.** Procédé selon la revendication 1, dans lequel les premier et second débitmètres fonctionnent sur les mêmes principes physiques.

**5.** Procédé selon la revendication 1, dans lequel les premier et second débitmètres fonctionnent sur des principes physiques différents.

**6.** Procédé selon la revendication 1, dans lequel les premier et second débitmètres sont des sous-systèmes dans un seul corps de débitmètre hybride.

**7.** Procédé selon la revendication 4, dans lequel les sous-systèmes de mesure sont des ensembles de transducteurs à ultrasons indépendants dans un même corps de compteur à ultrasons, produisant deux lectures de débit indépendantes ou plus.

**8.** Procédé selon la revendication 5, dans lequel les sous-systèmes comprennent :

(a) un compteur à vortex et un compteur à cône réunis dans un corps de compteur hybride, produisant deux lectures de débit indépendantes ou plus ; ou

(b) un système de débitmètre primaire avec un compteur DP secondaire indépendant formé par la lecture d'une ou plusieurs pressions différentielles sur deux points dans le système de débitmètre primaire ; ou

(c) un compteur Coriolis indépendant et un compteur DP indépendant formés à partir de la lecture d'une pression différentielle entre deux points à travers le corps du compteur Coriolis, produisant deux lectures de débit indépendantes.

9. Procédé selon la revendication 1, dans lequel un système de mesure de débit comprend un élément d'obstruction de fluide primaire et trois prises de pression disposées à des positions respectivement en amont, intermédiaire et en aval par rapport à l'élément d'obstruction de fluide primaire ; et dans lequel les premier et second débitmètres sont chacun fournis en mesurant une paire quelconque de :

(i) une pression différentielle de perte de pression permanente (PPL) prise entre les prises de pression en amont et en aval ;
(ii) une pression différentielle traditionnelle prise entre les prises de pression en amont et intermédiaire ; et
(iii) une pression différentielle récupérée prise entre les prises de pression intermédiaire et aval ;

pour produire les première et seconde lectures de débit.

10. Procédé selon la revendication 1, dans lequel les premier et second débitmètres sont étalonnés avant utilisation.

11. Procédé selon la revendication 1, dans lequel le débit est un débit de gaz humide.

12. Procédé selon la revendication 1, dans lequel le calcul d'une prédiction de débit comprend l'application d'un filtre de Kalman étendu afin de réduire les paramètres du système, les estimations et leurs incertitudes associées, étalonnant ainsi le système de mesure de débit in situ.

13. Procédé selon la revendication 1, dans lequel le calcul d'une prédiction de débit comprend l'application de l'une des méthodes suivantes : incertitude de vraisemblance maximale robuste ; filtre de Kalman étendu ; filtre de Kalman non parfumé ; filtre H-infini ; et mise à jour bayésienne.

14. Système de mesure de débit de fluide comprenant :

un premier débitmètre configuré pour produire une première lecture de débit d'un débit à mesurer, qui comporte une première incertitude associée ;
un second débitmètre configuré pour produire une seconde lecture de débit dudit débit à mesurer qui comporte une seconde incertitude associée ; et **caractérisé par**
un dispositif de calcul configuré pour calculer une prédiction de débit sur la base de la combinaison de la première lecture de débit, de la seconde lecture de débit, de la première incertitude, de la seconde incertitude, et en appliquant des critères basés sur des lois physiques ;
dans lequel la prédiction de débit comporte une incertitude associée qui est inférieure à chacune de la première incertitude et la seconde incertitude.

15. Produit de programme informatique comprenant des instructions qui, lorsqu'elles sont exécutées sur un dispositif parmi un ordinateur, un ordinateur de flux dédié ou un circuit, configurent le dispositif pour :

recevoir une première lecture de débit d'un débit à mesurer à partir d'un premier débitmètre, avec une première incertitude associée ;
recevoir une seconde lecture de débit provenant d'un second débitmètre dudit débit à mesurer, avec une seconde incertitude associée ; et
**caractérisé en ce que** le dispositif est configuré pour :

calculer une prévision de débit sur la base de la combinaison de la première lecture de débit, de la seconde lecture de débit, de la première incertitude, de la seconde incertitude et en appliquant des critères basés sur des lois physiques ;
dans lequel la prédiction de débit comporte une incertitude associée qui est inférieure à chacune de la première incertitude et la seconde incertitude.

*Figure 1*

Figure 2

EP 4 042 115 B1

*Figure 3*

Figure 4

*Figure 5*

*Figure 6*

Figure 7

*Figure 8*

*Figure 9*

**Figure 10**

EP 4 042 115 B1

*Figure 11*

*Figure 12*

*Figure 13*

*Figure 14*

*Figure 15*

*Figure 16*

EP 4 042 115 B1

```
┌─────────────────────┐
│ First Measuring      │
│ Device, producing    │          ┌─────────────────────┐
│ first flow rate      │          │ Calculation Device,  │
│ reading              │          │ receiving first and  │
└─────────────────────┘          │ second flow rate     │
                                  │ readings and         │
┌─────────────────────┐          │ producing a flow     │
│ Second Measuring     │          │ rate prediction.     │
│ Device, producing    │          └─────────────────────┘
│ second flow rate     │
│ reading              │
└─────────────────────┘
```

*Figure 17*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018195368 A1
- US 20100191481 A1, Steven, R.
- WO 2014181076 A, Steven, R.
- US 20100224009 A1, Steven, R.
- US 2772567 A, Boden

**Non-patent literature cited in the description**

- International Standard Organisation Measurement of Fluid Flow by Means of Pressure Differential Devices. *Inserted in circular cross-sections running full,* 2003, (5167
- **STEVEN R.** Diagnostic Methodologies for Generic Differential Pressure Flow Meters. *North Sea Flow Measurement Workshop,* 2008
- **DE LEEUW, R.** Liquid Correction of Venturi Meter Readings in Wet Gas Flow. *North Sea Flow Measurement Workshop,* 1997
- Guide to the Expression of Uncertainty in Measurement, International Organisation for Standardisation. *ISO/IEC Guide,* 1995, vol. 98
- **BRITT, H. I. ; LUECKE, R. H.** The Estimation of Parameters in Nonlinear. *Implicit Models Technometrics,* May 1973, vol. 15 (2), 233-247
- **CROWE ; CAMERON.** Reconciliation of Process Flow Rates by Matrix Projection Part II : The Nonlinear Case. *AIChE Journal,* April 1986, vol. 32, 616-623
- **STEVEN R. ; BRITTON, C. ; KINNEY, J.** Differential Pressure Meters - A Cabinet of Curiosities (and Some Alternative Views on Accepted DP Meter Axioms). *North Sea Flow Measurement Workshop,* 2012
- AGA Report 3, Orifice Metering of Natural Gas and Other Related Hydrocarbon Fluids. 2000
- **HUBER, P. J.** Robust Statistics. Wiley, 1981
- ISO 5167-2 Measurement of Fluid Flow by Means of Pressure Differential Devices. *Inserted in circular cross-sections running full - part 2,* 2003
- ISO-17089-1:2019 Measurement of fluid flow in closed circuits - Ultrasonic meters for gas - Part 1. *Meters for custody transfer and allocation measurement*
- **STEVEN, R. ; KINNEY, J. ; BABAJIDE, A. ; LEWIS, K.** Expanded Knowledge on Orifice Meter Response to Wet Gas Flows. *North Sea Flow Measurement Workshop,* 2014